# EUROPEAN PATENT APPLICATION

(11) **EP 4 572 456 A1**
(43) Date of publication of application: **18.06.2025**
(21) Application number: 22954410.1
(22) Date of filing: 10.08.2022
(51) Int. Cl.: H04W 72/04

(54) **INFORMATION INDICATION METHOD, REPEATER AND NETWORK DEVICE**

(71) Applicant: FUJITSU LIMITED, Kawasaki-shi, Kanagawa 211-8588 (JP)
(72) Inventor: ZHANG, Lei, Beijing 100022 (CN); JIANG, Qinyan, Beijing 100022 (CN); TIAN, Yan, Beijing 100022 (CN); WANG, Xin, Beijing 100022 (CN)
(74) Representative: Haseltine Lake Kempner LLP
(86) International application number: PCT/CN2022/111451
(87) International publication number: WO 2024/031435

(57) **Abstract**

Embodiments of the present disclosure provide an information indication method, a repeater and a network device. The method includes: a repeater acquires first information; and the repeater determines to perform, by using a first beam over a first time, reception or transmission on an access link at least according to the first information and/or a communication standard definition rule.

## Description

### TECHNICAL FIELD

The present disclosure relates to the field of communication technologies.

### BACKGROUND

Compared with traditional 3G (third generation mobile communication technology) and 4G (fourth generation mobile communication technology) systems, a 5G (fifth generation mobile communication technology) system may provide a greater bandwidth and a higher data rate, and may support more types of terminals and vertical services.

To this end, in addition to traditional telecommunication spectrums, the 5G system is also deployed on new spectrums, the frequencies of the new spectrums can be significantly higher than the frequencies of the traditional telecommunication spectrums used by 3G and 4G systems. For example, the 5G system may be deployed at a millimeter wave band (28 GHz, 38 GHz, 60 GHz and above, etc.).

According to the transmission law of a wireless signal, the higher a frequency of a carrier where the signal is located, the more serious the fading of the signal during transmission. Therefore, in actual deployment, compared to previous 3G, 4G systems, the 5G system more needs a cell coverage enhancement method, in particular when the 5G system deployed in a millimeter wave band. How to better enhance the cell coverage of the 5G system has become an urgent problem to be solved.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

In order to better solve the coverage problem of a cellular mobile communication system in actual deployment, an RF relay/repeater is adopted to amplify and forward a communication signal between a terminal equipment and a network device, which is a more commonly used deployment means. RF relays/repeaters are widely applied in the actual deployment of 3G and 4G systems. Generally speaking, an RF relay/repeater is a device that amplifies and forwards signals between a network device and a terminal equipment in an RF domain.

The inventor finds that for the coverage problem encountered in the deployment of the 5G system, adopting an RF relay/repeater to perform coverage enhancement is one of the feasible solutions. However, the traditional RF relay/repeater does not have a capability of communicating with a network device, and is not capable of adjusting the forwarding operation according to an actual situation of the network. Thus, if such repeaters are configured in a 5G system, it might help increase a signal strength to a certain extent, but it is not flexible enough to cope with the complex environmental changes in the 5G system, and compared with the same type of RF repeaters deployed in 3G and 4G systems, has poorer forwarding efficiency and forwarding effect.

For at least one of the above problems, embodiments of the present disclosure provide an information indication method, a repeater and a network device. The repeater has a capability of communicating with the network device, is capable of better strengthening signal coverage under a network configuration and coping with environmental changes (for example, reducing interference to other network devices and terminal equipments during forwarding), whereby the transmission efficiency of the entire network can be improved.

According to one aspect of the embodiments of the present disclosure, an information indication method is provided, including:
a repeater obtains first information; and
the repeater determines to perform, by using a first beam over a first time, receptions or transmissions on an access link (AC) at least according to the first information and/or a communication standard definition rule.

According to another aspect of the embodiments of the present disclosure, a repeater is provided, including:
an acquiring unit configured to acquire first information; and
a determining unit configured to determine to perform, by using a first beam over a first time, receptions or transmissions on an access link at least according to the first information and/or a communication standard definition rule.

According to another aspect of the embodiments of the present disclosure, an information indication method is provided, including:
a network device transmits first information to a repeater, and
wherein the repeater determines to perform, by using a first over a first time beam, receptions or transmissions on an access link (AC) at least according to the first information and/or a communication standard definition rule.

According to another aspect of the embodiments of the present disclosure, a network device is provided, including:
a transmitting unit configured to transmit first information to a repeater,
wherein the repeater determines to perform, by using a first beam over a first time, receptions or transmissions on an access link at least according to the first information and/or a communication standard definition rule.

According to a further aspect of the embodiments of the present disclosure, a communication system is provided, including:
a network device configured to transmit first information to a repeater; and
a repeater configured to determine to perform, by using a first beam over a first time, receptions or transmissions on an access link at least according to the first information and/or a communication standard definition rule.

One of advantageous effects of the embodiments of the present disclosure lies in: a repeater obtains first information; and the repeater determines to perform, by using a first beam over a first time, receptions or transmissions on an access link (AC) at least according to the first information and/or a communication standard definition rule. Thereby, the repeater is capable of determining forwarding of the AC link according to the first information and/or the communication standard definition rule, which may better strengthen signal coverage and cope with changes of an environment and main services in a cell, thus the transmission efficiency of the entire network may be improved.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of an application scenario of the embodiments of the present disclosure;
FIG. 2 is a schematic diagram of an NCR in the embodiments of the present disclosure;
FIG. 3 is a schematic diagram of NCR forwarding in the embodiments of the present disclosure;
FIG. 4 is another schematic diagram of NCR forwarding in the embodiments of the present disclosure;
FIG. 5 is a schematic diagram of an information indication method in the embodiments of the present disclosure;
FIG. 6 is a schematic diagram of a repeater in the embodiments of the present disclosure;
FIG. 7 is a schematic diagram of information indication in the embodiments of the present disclosure;
FIG. 8 is a schematic diagram of a network device in the embodiments of the present disclosure; and
FIG. 9 is a schematic diagram of an electronic device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to...... ", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

To enhance coverage, an RF repeater is introduced in the 3GPP Rel-17 research to forward transmission between a terminal equipment (UE) and a network device (base station). For the network device and the terminal equipment, the RF repeater introduced in Rel-17 is transparent, that is, the network device and the terminal equipment do not know existence of the RF repeater.

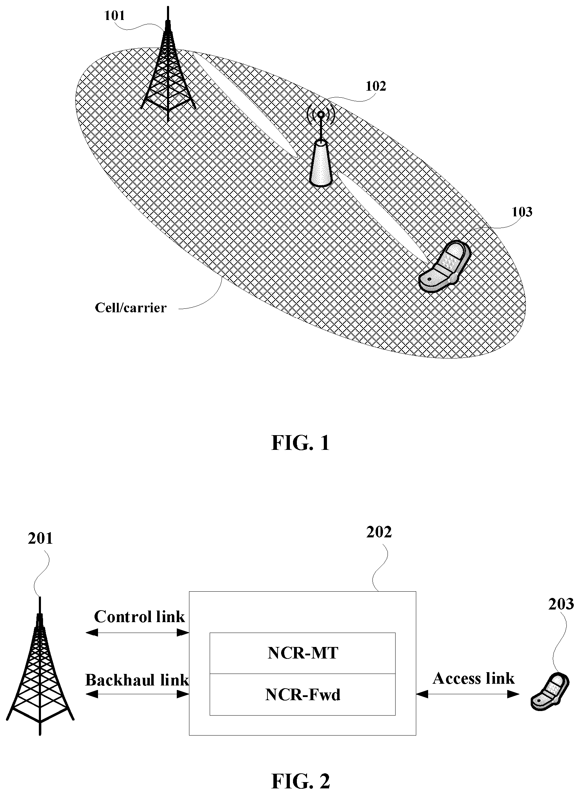

FIG. 1 is a schematic diagram of an application scenario of the embodiments of the present disclosure, as shown in FIG. 1, for convenience of description, description is made by taking "a network device (such as a 5G base station gNB) 101, a repeater 102 and a terminal equipment (such as a UE) 103" as an example, the present disclosure is not limited to this.

As shown in FIG. 1, the terminal equipment 103 establishes a connection with and communicates with the network device 101. In order to increase the quality of communication, a channel/signal transmitted between the terminal equipment 103 and the network device 101 is forwarded via the repeater 102. Channel/signal exchange between the network device 101, the terminal equipment 103 and the repeater 102 adopts a beam-based reception and transmission method.

As shown in FIG. 1, the network device 101 may have a cell/carrier, the network device 101, the repeater 102 and the terminal equipment 103 may perform forwarding/communication in the cell; however, the present disclosure is not limited to this, for example, the network device 101 may further have other cells/carriers.

In the embodiments of the present disclosure, transmission of existing or further implementable services may be carried out between the network device and the terminal equipment. For example, these services may include but be not limited to: enhanced Mobile Broadband (eMBB), massive Machine Type Communication (mMTC), Ultra-Reliable Low-Latency Communication (URLLC), Internet of Vehicles (V2X) communication.

A traditional repeater does not have a capability of communicating with a network device. Thus, although the traditional repeater may help enhance a signal strength, it is not flexible enough to cope with complex environmental changes. Deploying the traditional repeater in a 5G network (in particular in a high-frequency 5G network) may possibly cause unnecessary interference with other network devices and/or terminal equipments, thereby reducing the transmission efficiency (e.g., throughput) of the entire network. In order to make forwarding of the repeater more flexible to adapt to the characteristics of a 5G network, the network device needs to assist the repeater and may configure the forwarding of the repeater according to a condition of the network.

To enhance NR coverage, 3GPP Rel-18 proposes a network-controlled repeater (NCR) scheme to forward a signal between a network device and a terminal equipment. The NCR may communicate directly with the network device via a control link to assist a forwarding operation of the NCR.

FIG. 2 is a schematic diagram of an NCR in the embodiments of the present disclosure. As shown in FIG. 2, NCR 202 is configured between the network device 201 and the terminal equipment 203. NCR 202 may include two modules/components: a mobile terminal of a repeater (NCR-MT) and a forwarding module of the repeater (NCR-Fwd); the NCR-Fwd is also called a routing unit of an NCR-RU. The NCR-MT is used to communicate with a network device, and the NCR-Fwd is used to forward a signal between a network device and a terminal equipment.

As shown in FIG. 2, the NCR in the embodiments of the present disclosure may have three links: a control link (C-link), a backhaul link (BH link) for forwarding, and an access link (AC link). The C-link is used for communication between an NCR and a network device. The BH link is used for a repeater to receive a to-be-forwarded signal from a network device, or, forward a signal from a terminal equipment to the network device. The AC link is used for a repeater to forward a signal from a network device to a terminal equipment, or, to receive a to-be-forwarded signal from the terminal equipment.

The inventor recognizes that a 5G system is more complex than previous 3G, 4G systems, for example, is capable of supporting more types of services and terminal types, and for another example, needs to be deployed in multiple frequency bands and scenarios, etc. Compared with traditional RF repeaters, the NCR needs to have a beam-based function.

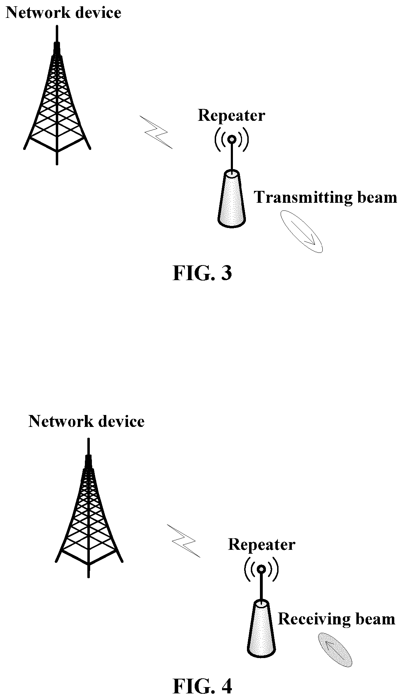

FIG. 3 is a schematic diagram of NCR forwarding in the embodiments of the present disclosure. As shown in FIG. 3, a repeater forwards out a signal from a network device by using a transmitting beam on an AC link. FIG. 4 is another schematic diagram of NCR forwarding in the embodiments of the present disclosure. As shown in FIG. 4, a repeater receives a signal for being forwarded to a network device by using a receiving beam on an AC link.

However, the inventor finds: at present, there is no specific scheme on how a repeater determines information such as a beam of the AC link. That is, how a repeater determines forwarding information (beam, time, signal direction, etc.) of an AC link is an urgent problem to be solved.

In addition, during a service process, conflicts of different service types and terminal types are also allowed, and a systematic conflict resolution is provided. For example, when a URLLC service having high requirements on reliability and delay arrives, transmission of eMBB service data in progress may be interrupted or abandoned so that URLLC service data having a higher priority may be transmitted in a timely and reliable manner. In addition, due to advanced and complex functions of the 5G system, there may be reconfiguration, rewriting and other operations when configuring and scheduling at a network side. A main purpose of the NCR is to cover a region with a poor quality of the network signal, terminals served by the NCR may be various terminals. Therefore, a signal forwarded by the NCR and exchanged between a network side and a terminal side may have different priorities, etc.

In view of the above understanding, the inventor further believes that how the NCR avoids or handles a conflict of beam indication and other configuration in an AC link is a further urgent problem to be solved during designing an NCR which serves a 5G network.

Various implementations of the embodiments of the present disclosure will be described below with reference to the drawings. These implementations are exemplary only and are not limitations to the present disclosure.

In the embodiments of the present disclosure, a repeater may communicate with a network device, the repeater may receive a communication channel/signal transmitted by the network device, and demodulate/decode the channel/signal, thereby obtaining information transmitted by the network device to the repeater, the signal processing process is hereinafter referred to as "communication". The repeater may further forward a channel/signal transmitted between the network device and the terminal equipment, the repeater does not demodulate/decode the channel/signal, may perform amplification and other processing, the signal processing process is hereinafter referred to as "forwarding". "Communication" and "forwarding" are collectively referred to as "transmission". In addition, "perform transmission or reception on an AC link" may be equivalent to "perform forwarding on an AC link", and "perform transmission or reception on a control link" may be equivalent to "perform communication on a control link". The above terms are only for the sake of description, and do not constitute restrictions on the present disclosure.

For the sake of simplicity, the channel/signal that perform direct communication between a network device and a repeater or between a third device (such as a terminal equipment) and a repeater may be called a communication signal. The repeater needs to perform encoding and/or modulation when a communication signal is transmitted. The repeater needs to perform decoding and/or demodulation when a communication signal is received. In addition, the channel/signal forwarded by a repeater may be called a forwarded signal, the repeater may perform signal processing such as amplification of the forwarded signal, but does not perform decoding and/or demodulation.

In the embodiments of the present disclosure, the repeater may also be expressed as a transponder, a radio frequency repeater, a relay, a radio frequency relay; or may also be expressed as a transponder node, a repeater node, a relay node, an intelligent/smart transponder, an intelligent/smart repeater, an intelligent/smart relay, an intelligent/smart transponder node, an intelligent/smart repeater node, an intelligent/smart relay node, etc., the present disclosure is not limited to these.

In the embodiments of the present disclosure, the network device may be a device of a serving cell of a terminal equipment, or a device of a cell where a repeater is located, or a device of a serving cell of a repeater, or a parent node of a repeater. The present disclosure does not limit the name of the repeater, as long as the device with said functions can be achieved, all are included in the scope of the repeater of the present disclosure.

In the embodiments of the present disclosure, a beam may also be expressed as a lobe, a reference signal (RS), a transmission configuration indication (TCI), and a spatial domain filter, etc.; or, may further be expressed as a beam index, a lobe index, a reference signal index, a transmission configuration indication index, and a spatial filter index, etc. The reference signal is e.g. a channel state information reference signal (CSI-RS), a sounding reference signal (SRS), an RS used for a repeater, and an RS transmitted by the repeater, etc. The TCI may further be expressed as a TCI state. The embodiments of the present disclosure are not limited to this.

### Embodiments of a first aspect

The embodiments of the present disclosure provide an information indication method, which is described from a repeater side.

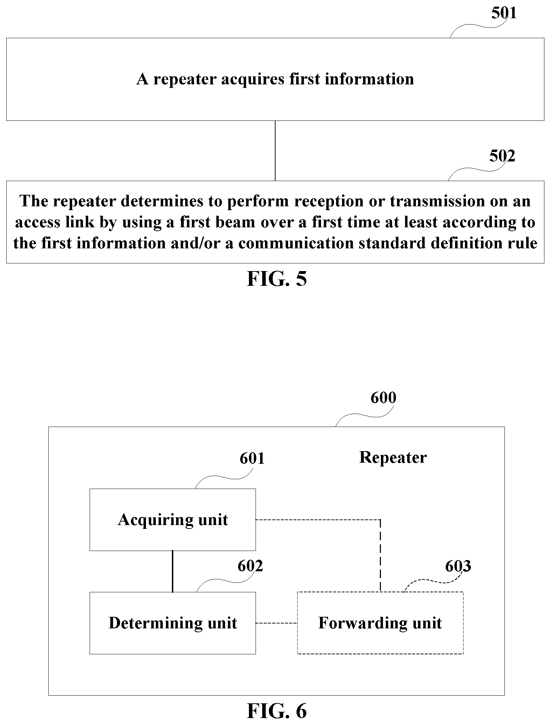

FIG. 5 is a schematic diagram of an information indication method in the embodiments of the present disclosure, as shown in FIG. 5, the method includes:
501, a repeater acquires first information; and
502, the repeater determines to perform, by using a first beam over a first time, reception or transmission on an access link (AC) at least according to the first information and/or a communication standard definition rule.

It should be noted that the above FIG. 5 is only schematic description of the embodiments of the present disclosure, but the present disclosure is not limited to this. For example, an execution order of each operation may be adjusted appropriately, moreover some other operations may be added or one or more operations may be removed. Persons skilled in the art may make appropriate modifications according to the above contents, not limited to the above FIG. 5.

Accordingly, the repeater is capable of determining forwarding of the AC link according to the first information and/or the rules defined in communication standards, which may better strengthen coverage of signal and cope with changes of an environment and main services in a cell, thus the transmission efficiency of the entire network may be improved.

In some of the embodiments, the repeater determines the first beam and/or the first time according to at least one of the following: the rules defined in communication standards , dynamic signaling, semi-static signaling, or operation administration and maintenance (OAM) configuration information.

For example, the first beam may be determined by an NCR itself through pre-determined rules in a standard protocol. For another example, an NCR is set the number of beams used for AC link forwarding when leaving factory, and then the NCR selects one of a plurality of beams. For a further example, an NCR determines the first beam by receiving system information and/or using some other information. Determining the first beam according to a standard predefined rule or factory leaving settings helps to reduce complexity of an NCR and reduce the NCR equipment cost. For example, this implementation may be applied to a periodically transmitted common signal, etc.

For another example, a network side (gNB or OAM) configures/indicates the first beam for the NCR. The first beam may be indicated via dynamic signaling, or may be indicated via semi-static signaling, or may be indicated via OAM configuration information. Configuring/indicating the first beam by the network side for the NCR may provide better flexibility, so that the network side may configure/indicate the first beam for the NCR according to an actual need. For example, this implementation may be applied to an aperiodic signal, etc.

In some of the embodiments, the first time includes at least one time unit, the at least one time unit being continuous in a time domain, or the at least one time unit being not continuous in a time domain. The time unit is e.g., a subframe, a slot, a symbol, or a mini-slot.

In some of the embodiments, the first information is carried by semi-static signaling, and/or, the first information is configured by an OAM entity, and/or, the first information is carried by a physical downlink control channel (PDCCH) or dynamic signaling.

In some of the embodiments, the first information is used to indicate the first time, and/or, the first information is used to indicate the first beam, and/or, the first information is used to indicate the repeater to perform reception or transmission on the access link. Flexibility of the first information indication facilitates reuse of existing signaling and/or indication information in a 5G system under different application scenarios, which can reduce standardization work, accelerate a standardization process, help accelerate industrial upgrading, and faster and better adapt the telecommunication industry to emerging applications and emerging fields.

For example, the first beam is determined by an NCR according to a predefined rule and the first time is indicated via the first information (e.g. by receiving dynamic signaling, semi-static signaling or OAM configuration).

For another example, the first time is determined by an NCR according to a predefined rule and the first beam is indicated via the first information (e.g. by receiving dynamic signaling, semi-static signaling or OAM configuration).

For a further example, both the first beam and the first time are determined by a NCR according to a predefined rule, and a repeater is indicated to perform reception or transmission on the access link via the first information (e.g. by receiving dynamic signaling, semi-static signaling, or OAM configuration).

In some of the embodiments, indication of the first beam is based on a beam index, and/or, the indication of the first beam is based on a synchronous signal block (SSB) index, and/or, the indication of the first beam is based on a reference signal index. That the indication of the first beam is based on a beam index may further be a serial number of beams of an AC link. That the indication of the first beam is based on an SSB index or a reference signal index may further be that the first beam is named with an SSB index or a reference signal index.

The indication of the first beam may be that indicating a beam index which is corresponding to the first beam, and/or, indicating an SSB index which is corresponding to the first beam, and/or, indicating a reference signal index which is corresponding to the first beam. A beam has a one-to-one corresponding relation with a beam index (or SSB index, or reference signal index). Corresponding relation between the beam and the beam index (or SSB index, or reference signal index) may be determined by the repeater or indicated by a network side to the repeater. Once the corresponding relation between the beam and the beam index (or SSB index, or reference signal index) is determined, it does not change any more, or, does not change any more before a repeater is reset and/or reconfigured and/or re-indicated and/or restarted or started next time.

In some of the embodiments, the first information is used to indicate the repeater to perform receptions or transmissions on the access link by using the first beam over the first time.

For example, the first time, the first beam and a forwarding direction are indicated by the first information.

In some of the embodiments, the first information is used to indicate the first time and the first beam; the repeater acquires second information, the second information being at least used for the repeater to determine to perform receptions or transmissions on the access link by using the first beam over the first time.

In some of the embodiments, the second information is carried by dynamic signaling and/or semi-static signaling, and/or, the second information is configured by an OAM entity.

For example, the first time and the first beam are indicated by the first information, and other information (such as a forwarding direction) is indicated by the second information.

In some of the embodiments, the second information at least indicates that the first time includes an uplink time unit and/or a downlink time unit and/or a flexible time unit. For example, the second information includes time division duplex (TDD) uplink and downlink configuration information.

For example, when indicating a beam, a network side may also indicate a forwarding direction of the beam.

For another example, receptions and transmissions on an AC link have consistency, that is, beams forwarding uplinks or downlinks are the same. In this situation, even if the network side does not specify the beam is uplink or downlink, for example only indicates one beam (for example indicating an index of the beam), the network side and the NCR do not disagree about which beam the beam is. In this situation, in a specific implementation, the NCR may further determine a transmission direction of a signal for forwarding of the indicated beam by being combined with other information (e.g., TDD config). By adopting this implementation, beam indications can be reduced.

In some of the embodiments, the repeater determines to perform receptions on the access link by using the first beam over an uplink time unit of the first time.

In some of the embodiments, the repeater determines to perform transmissions on the access link by using the first beam over a downlink time unit of the first time.

In some of the embodiments, the repeater determines to perform receptions or transmissions on the access link by using the first beam at least one flexible time unit of the first time.

In some of the embodiments, the repeater determines not to perform reception and transmission on the access link over at least one flexible time unit of the first time.

In some of the embodiments, the first information is used to indicate a first time, the first time being related to a first signal. The first signal is not generated by the repeater, and/or, the repeater does not demodulate and decode the first signal. That is, the first signal is the forwarded signal mentioned above.

For example, the first information indicates a time to forward a common signal (the first time), and the first beam is determined by an NCR itself, or according to a predefined rule, or randomly. The repeater does not perform signal processing such as demodulation on a signal forwarded by it, and only amplifies a signal forwarded by it. Beam performance of the repeater used in the AC link may be evaluated by results of measurements by a third party device (e.g. a terminal equipment) and/or network side measurements. The repeater does not make any measurement of a signal forwarded by it. Therefore, a specific corresponding relation between a name of a beam and the beam does not affect indication and configuration of a network side on a forwarding behavior of the repeater. NCR determines a beam by itself, which may reduce indicating/configuring signaling overhead of a network side and reduce the complexity of the network side.

In some of the embodiments, the repeater determines the first beam, the first beam is related to the first signal; the repeater determines to receive or transmit the first signal on the access link by using the first beam over the first time.

In some of the embodiments, the first signal at least includes an SSB whose index is n; the first information includes system information, and the first time at least includes a time unit corresponding to the SSB index n.

In some of the embodiments, the repeater determines the SSB index n for performing transmissions on the access link.

In some of the embodiments, the SSB index n is configured or indicated by a network side, and/or, the SSB index n is pre-defined by a communication standard, and/or, the SSB index n is pre-set in the repeater.

In some of the embodiments, the repeater determines the first beam for transmitting the SSB whose index is n on the access link.

In some of the embodiments, the repeater determines the number N of SSBs for being transmitted on the access link and/or indexes of N SSBs for being transmitted on the access link, the SSB index n is one of the indexes of the N SSBs; the number N of SSBs and/or the indexes of N SSBs is/are pre-set, or, the number N of SSBs and/or the indexes of N SSBs is/are pre-defined by a communication standard, or, the number N of SSBs and/or the indexes of N SSBs is/are configured or indicated by a network side for the repeater.

In some of the embodiments, a value of the number N of SSBs is pre-set, and the repeater reports the number N of SSBs to the network side. And, the network side configures/indicates the indexes of N SSBs for the repeater.

In some of the embodiments, the repeater determines N beams for transmitting the N SSBs on the access link, and determines a corresponding relation between the N beams and the N SSBs.

For example, N may further be the number of beams used to forward SSBs, and/or, N may further be the number of forward beams supported by the repeater on the AC link, and/or, N may further be the number of forward beams used by the repeater on the AC link.

In some of the embodiments, the repeater determines N beams for transmitting the N SSBs on the access link according to a network side configuration and/or indication, or, the repeater determines N beams for transmitting the N SSBs on the access link according to a rule defined in communication standards, or, the repeater determines by itself N beams for transmitting the N SSBs on the access link. For example, the rule defined in communication standards is that an SSB with small index corresponds to a beam with small index.

In some of the embodiments, the first beam corresponds to the SSB index n one by one, and the one-to-one corresponding relation remains unchanged until the repeater is restarted and/or reconfigured. In this way, ambiguity may be avoided when the network side configures/indicates a forwarding beam of the AC link to the NCR.

For example, the NCR determines by itself a beam to be used, and there is no change after determination.

In some of the embodiments, the first time further includes a time unit or a random access occasion (RACH occasion), corresponding to the SSB index n, for transmitting a random access preamble (RACH preamble). The first signal further includes a signal transmitted using a time-domain and/or frequency-domain resource corresponding to a time unit or a random access occasion (RACH occasion), corresponding to the SSB index n, for transmitting a random access preamble (RACH preamble).

**In** some of the embodiments, the first signal includes at least one of the following signals or channels or information, or, the first signal is related to at least one of the following signals or channels or information:
a synchronization signal (SS),
a synchronization signal block (SSB),
a system information block (SIB),
a main information block (MIB),
Msg1 (a random access channel, RACH),
Msg2,
Msg3,
Msg4,
Msg5,
a physical downlink control channel (PDCCH) for scheduling (or triggering) Msg1 and/or Msg2 and/or Msg3 and/or Msg4 and/or Msg5,
a physical downlink shared channel (PDSCH) for carrying Msg2 and/or Msg4,
a physical uplink shared channel (PUSCH) for carrying Msg3 and/or Msg5,
a channel state information reference signal (CSIRS),
a sounding reference signal (SRS),
beam failure recovery (BFR),
a physical uplink control channel (PUCCH) for carrying beam failure recovery (BFR),
ACK/NACK information,
a physical uplink control channel (PUCCH) for carrying ACK/NACK information,
a scheduling request (SR), or
a physical uplink control channel (PUCCH) for carrying an SR.

**In** some of the embodiments, the repeater, at least based on the first information, determines to receive or transmit the first signal on the access link by using the first beam over the first time.

**In** some of the embodiments, the first information includes information of the position of a time domain and/or frequency domain where the first signal is located, and/or, the first information is carried by one or more than one signaling.

In some of the embodiments, the first information at least includes system information; the repeater, at least according to the first information, determines to receive or transmit a signal related to the first signal over the first time.

The above text schematically describes the first information, the first beam and the first time, etc., the present disclosure is not limited to these.

Since the AC link is a forwarding link of the NCR, the NCR may or may not know what signal forwarded on the AC link. Or, in other words, even if the NCR does not know what signal forwarded on the AC link, it does not affect the NCR to forward the signal.

The NCR is configured at a network side to forward a signal with a specific transmission direction (such as uplink or downlink, or from a network side to a terminal side or from the terminal side to the network side) over a specific time and using a specific beam. In this way, the complexity of the communication protocol is reduced, and the implementation cost of the NCR is reduced, which helps to increase a cost performance ratio of an NCR device, so that the NCR device can serve actual network services better and more.

On the other hand, the NCR may further identify a type of a signal forwarded by it, for example, the signal is a common signal (e.g., SS, SSB, SIB, MIB, RACH) or other signal (e.g., a specific signal of a terminal equipment served by the NCR). In this way, the NCR device with this capability may acquire relevant information of the signal forwarding independently to a certain extent, thereby reducing the complexity of a network side device, reducing the cost of the network device, and reducing configuration information exchanged between the network side and the NCR, so that more time-domain/frequency-domain/space-domain resources are used to transmit service data, thereby improving the efficiency of spectrum use.

The following text schematically describes how the NCR avoids or handles a conflict of a configuration such as beam indication for the AC link.

In some of the embodiments, a repeater acquires third information, the third information being related to a second time, the second time and the first time at least partially overlapping;
the third information being further used to indicate a second beam to the repeater for forwarding on the access link, and/or, the third information being further used to indicate a forwarding direction to the repeater on the access link within the at least partially overlapping time, and/or, the third information being further used to indicate a transmission direction and/or an on-off state related to the at least partially overlapping time.

The following text first schematically describes a situation in which the second beam is different from the first beam, that is, beams conflict. Description is made below by taking introduction of a concept of priority in conflict resolution as an example, a priority of the first beam is higher or equal to a priority of the second beam; the present disclosure is not limited to this.

In some of the embodiments, the third information is at least used to indicate the repeater to perform forwarding on the access link by use the second beam over the second time, the forwarding direction is consistent or inconsistent with the forwarding direction determined by the repeater over the first time, the repeater performs receptions or transmissions on the access link by using the first beam over the first time.

For example, the repeater determines to perform, by using the first beam over the first time, receptions on the access link at least according to the first information, the third information is used to indicate the repeater to perform, by using the second beam over the second time, receptions on the access link, and the repeater performs reception on the access link by using the first beam over the first time.

For another example, the repeater determines to perform, by using the first beam over the first time, transmissions on the access link at least according to the first information, the third information is used to indicate the repeater to perform, by using the second beam over the second time, transmissions on the access link, and the repeater performs transmissions on the access link by using the first beam over the first time.

For another example, the repeater determines to perform, by using the first beam over the first time, receptions on the access link at least according to the first information, the third information is used to indicate the repeater to perform, by using the second beam over the second time, transmissions on the access link, and the repeater performs receptions on the access link by using the first beam over the first time.

For a further example, the repeater determines to perform, by using the first beam over the first time, transmissions on the access link at least according to the first information, the third information is used to indicate the repeater to perform, by using the second beam over the second time, receptions on the access link, and the repeater performs transmissions on the access link by using the first beam over the first time.

In some of the embodiments, a priority of the first beam is configured and/or indicated by a network side, or the priority of the first beam is defined by a communication standard, or the priority of the first beam is determined by the repeater at least according to the first information.

In some of the embodiments, a priority of at least one time unit included by the first time is higher than or equal to a preset priority, or is higher than or equal to a priority of any time unit in the second time, or is higher than or equal to a priority of any time unit in the at least partially overlapping time. In conflict resolution, a forwarding priority determined by the repeater and associated with the first time is higher than or equal to a forwarding priority associated with the second time.

For example, a priority of the time unit is configured and/or indicated by the network side, or the priority of the time unit is defined by the communication standard, or the priority of the time unit is determined at least by a signal associated with the time unit.

In some of the embodiments, the third information is further used to indicate a second beam to the repeater for forwarding on the access link, wherein the third information indicates the repeater to receive or transmit a second signal on the access link by using the second beam over the second time; a priority of the second signal is lower than or equal to a priority of the first signal. In conflict resolution, a forwarding priority determined by the repeater and associated with the first signal is higher than or equal to a forwarding priority associated with the second signal.

In some of the embodiments, a priority of the first signal and/or the second signal is/are defined by a communication standard, or the priority of the first signal and/or the second signal is/are configured and/or indicated by a network side.

In some of the embodiments, the priority of the first signal is highest.

For example, the priority of the first signal is equal to or higher than a priority of other signals received or transmitted by a NCR on an AC link; or, the priority of the first signal is equal to or higher than that of other signals received or transmitted by the NCR on the AC link within the first time; or, the priority of the signal received or transmitted by the NCR on the AC link is divided into M levels, and the priority of the first signal is the highest level.

In some of the embodiments, the first information is carried by semi-static signaling and/or configured by an OAM entity, and the third information is carried by dynamic signaling. For example, a priority of the first information carried by semi-static signaling or OAM configuration is higher than or equal to a priority of the third information carried by dynamic signaling. In conflict resolution, a forwarding priority related to the first information carried by semi-static signaling or OAM configuration is higher than or equal to a forwarding priority related to the third information carried by dynamic signaling.

Thus, when a conflict occurs, forwarding of more important common signals may be effectively guaranteed, and hence adverse consequences such as network access failure, link failure, and beam failure caused by poor transmission quality of common signals may be avoided. Semi-static signaling may be used to indicate forwarding related to a more important, periodically transmitted or received common signal, such as an SSB signal, an SIB signal and a signal that may contain a RACH. Dynamic signaling bearer may be used to indicate forwarding related to dynamic data or relatively dynamic data, such as a PDSCH and/or a PUSCH of a terminal equipment served by an NCR.

In some of the embodiments, the first information is carried by dynamic signaling, the third information is carried by semi-static signaling and/or indicated by an OAM, or the third information is carried by dynamic signaling; the semi-static signaling includes an MAC CE and/or an RRC signaling; the repeater receives the third information before receiving the first information.

Thus, information may be rewritten through dynamic signaling. For example, by adopting this method, it may ensure that a more important to-be-forwarded signal is forwarded reliably and efficiently. When one of terminals served by the NCR has URLLC service that has high requirements on reliability and delay, it needs to transmit or receive URLLC service signals. Network side may rewrite a forwarding configuration/indication using dynamic signaling to ensure reliable and timely forwarding of URLLC service signals.

In some of the embodiments, the first information is carried by semi-static signaling, the third information is carried by semi-static signaling and/or indicated by an OAM and/or carried by dynamic signaling; the semi-static signaling includes an MAC CE and/or an RRC signaling; the repeater receives the third information before receiving the first information.

Thus, information may be rewritten (or updated, or reconfigured, etc.) through semi-static signaling. For example, by adopting this method, when the network side adjusts transmission of a periodically transmitted common signal, the network side is allowed to rewrite a forwarding configuration of the periodically transmitted common signal, so that a repeater adapts to forwarding of an adjusted common signal.

The above implementation methods may be combined, for example, are applied in different scenarios, so as to provide better flexibility for forwarding of a repeater while ensuring forwarding of important signals.

The following text schematically describes a situation in which transmission directions are inconsistent, i.e., transmission directions conflict.

In some of the embodiments, the third information is further used to indicate a transmission direction and/or an on-off state related to the at least partially overlapping time, wherein the third information is at least used to indicate signal transmission direction of one time unit of the at least partially overlapping time, and wherein the signal transmission direction of the one time unit is inconsistent with signal transmission direction on the access link using the first beam over the first time determined by the repeater according to the first information.

In some of the embodiments, the repeater performs receptions or transmissions on the access link by using the first beam over the first time.

For example, the repeater determines to perform reception (uplink) on the access link by using the first beam over the first time, and the third information is at least used to indicate one time unit in the at least partially overlapping time as a downlink time unit or a flexible time unit.

For another example, the repeater determines uses the first beam over the first time to perform transmission (downlink) on the access link, and the third information is at least used to indicate one time unit in the at least partially overlapping time as an uplink time unit or a flexible time unit.

In some of the embodiments, the repeater does not perform receptions and/or does not perform transmissions on the access link within a time unit over which the signal transmission directions are inconsistent.

For example, the repeater determines performs reception (uplink) on the access link by using the first beam over the first time, the third information is at least used to indicate that one of time units included the first time is a downlink time unit or a flexible time unit; the repeater does not perform reception in the downlink time unit or flexible time unit, or does not perform reception over the first time.

For another example, the repeater determines perform transmission (downlink) on the access link by using the first beam over the first time, the third information is at least used to indicate that one of time units included in the first time is an uplink time unit or a flexible time unit; the repeater does not perform transmission in the uplink time unit or flexible time unit, or does not perform transmission over the first time.

The following text schematically describes situations of an OFF time, i.e., a forwarding time conflicts with the OFF time.

In some of the embodiments, the third information is at least used to indicate that at least one time unit in time units included in the first time is not used for reception or transmission. The at least one time unit not used for reception or transmission is an OFF time unit, or a sleep/dormancy time unit, or a null time unit.

In some of the embodiments, the repeater performs reception or transmission on the access link by using the first beam over the first time. For example, because the first signal is very important for initial access of a terminal equipment, it needs to be forwarded even in an OFF state.

In some of the embodiments, the repeater does not perform reception and/or not to perform transmission on the access link within the time unit indicated as being not used for reception or transmission. Hence, the NCR does not perform forwarding in an OFF time, which may improve energy saving efficiency.

In some of the embodiments, the third information is carried by signaling, the signaling is at least used to indicate the OFF time. For example, the signaling is further used to indicate a TDD UL DL configuration, the OFF is a state of a time unit in the TDD UL DL configuration. For example, the signaling is dedicated signaling used to indicate the OFF time. For example, the signaling is DRX signaling.

In some of the embodiments, the signaling is further used to indicate an uplink time unit, and/or a downlink time unit, and/or a flexible time unit. For example, the signaling is at least used to indicate the TDD UL DL configuration.

The following text schematically describes situations of a C-link, that is, a forwarding link conflicts with a control link.

In some of the embodiments, a repeater acquires fourth information, the fourth information being related to a third time, the third time and the first time at least partially overlapping.

In some of the embodiments, the fourth information is at least used to indicate the repeater to receive a signal from a network side or transmit a signal to the network side on a control link over the third time.

In some of the embodiments, the repeater receives a signal from the network side or transmits a generated signal to the network side on the control link over the third time.

Accordingly, the NCR preferentially ensures connection with a network device to avoid forwarding on an AC link from being affected due to unreliable connection with the network side.

For example, the repeater determines to perform, by using the first beam over the first time, reception on the access link at least according to the first information, the fourth information is used to indicate the repeater to perform reception on the control link over the third time; and the repeater does not perform reception on the access link over the at least partially overlapping time.

For another example, the repeater determines to perform, by using the first beam over the first time, transmission on the access link at least according to the first information, the fourth information is used to indicate the repeater to perform transmission on the control link over the third time; and the repeater does not perform transmission on the access link at the at least partially overlapping time.

For another example, the repeater determines to perform, by using the first beam over the first time, reception on the access link at least according to the first information, the fourth information is used to indicate the repeater to perform reception on the control link over the third time; and the repeater does not perform reception on the access link over the first time.

For a further example, the repeater determines to perform transmission, by using the first beam over the first time, on the access link at least according to the first information, the fourth information is used to indicate the repeater to perform transmission on the control link over the third time; and the repeater does not perform transmission on the access link over the first time.

In some of the embodiments, the repeater performs reception or transmission on the access link by using the first beam over the first time.

Accordingly, the NCR preferentially ensures stability of the AC link, which helps protect transmission of a terminal equipment with a high-priority, such as a terminal equipment with URLLC service.

For example, the repeater determines to perform, by using the first beam over the first time, reception on the access link at least according to the first information, the fourth information is used to indicate the repeater to receive a signal from a network side on the control link over the third time; the repeater does not receive the signal from the network side on the control link over the at least partially overlapping time.

For another example, the repeater determines to perform, by using the first beam over the first time, transmission on the access link at least according to the first information, the fourth information is used to indicate the repeater to transmit a signal to a network side on the control link over the third time; the repeater does not transmit the signal to the network side on the control link over the at least partially overlapping time.

For another example, the repeater determines to perform, by using the first beam over the first time, reception on the access link at least according to the first information, the fourth information is used to indicate the repeater to receive a signal from a network side on the control link over the third time; the repeater does not receive the signal from the network side on the control link over the third time.

For a further example, the repeater determines to perform, by using the first beam over the first time, transmission on the access link at least according to the first information, the fourth information is used to indicate the repeater to transmit a signal to a network side on the control link over the third time; the repeater does not transmit the signal to the network side on the control link over the third time.

In some of the embodiments, the fourth information is used to indicate the repeater to generate and transmit to a network side at least one of the following signals over the third time:
Msg1 (RACH, preamble);
BFR,
SR,
A/N,
SRS,
Msg3,
Msg5,
non-periodic CSI report, or
semi-persistent CSI report.

In some of the embodiments, the fourth information is used to indicate the repeater to receive from a network side at least one of the following signals over the third time:
Msg2,
Msg4,
PDCCH that schedules Msg2 and/or Msg4,
CSIRS, or
BFRR;
And the signal is demodulated or decoded by the repeater.

The above text schematically describes how the NCR handles a conflict of a configuration such as beam indication in the AC link, the present disclosure is not limited to this. To avoid a conflict, the network side and the repeater may further follow certain policies or behaviors.

The following text schematically describes conflict avoidance behaviors at a network side.

In some of the embodiments, a network side does not transmit indication information inconsistent with the first information;

In some of the embodiments, the network side does not indicate the repeater to perform transmission or reception by using a beam other than the first beam over the first time.

In some of the embodiments, the network side does not indicate that the first time is an OFF time.

In some of the embodiments, in a case where the first information is at least used to indicate the repeater to perform reception on the access link by using the first beam over the first time, the network side does not indicate that the first time includes a downlink time unit and/or a flexible time unit.

In some of the embodiments, in a case where the first information is at least used to indicate the repeater to perform transmission on the access link by using the first beam over the first time, the network side does not indicate that the first time includes an uplink time unit and/or a flexible time unit.

The following text schematically describes conflict avoidance behaviors at a repeater side.

In some of the embodiments, the repeater does not expect to be indicated with indication information inconsistent with the first information;

In some of the embodiments, the repeater does not expect to be indicated to perform transmission or reception by using a beam other than the first beam over the first time.

In some of the embodiments, the repeater does not expect to be indicated that the first time is an OFF time.

In some of the embodiments, in a case where the first information is at least used to indicate the repeater to perform reception on the access link by using the first beam over the first time, the repeater does not expect to be indicated that the first time includes a downlink time unit and/or a flexible time unit.

In some of the embodiments, in a case where the first information is at least used to indicate the repeater to perform transmission on the access link by using the first beam over the first time, the repeater does not expect to be indicated that the first time includes an uplink time unit and/or a flexible time unit.

The above text schematically describes handling or avoiding a conflict, and the following text further describes priorities.

In some of the embodiments, the priority may be expressed as a priority of a beam: a priority of a part of beams is higher than that of another part of beams.

For example, a beam used to forward certain signals has a high priority. For example, a priority of a beam used to forward a signal with a high priority such as an SSB is high.

For another example, a priority of a part of beams configured at a network side is high, for example, specifying a part of beam scheduling indexes; or, the network side configures or indicates a priority of one beam.

For a further example, it is agreed in advance that a beam indicated by certain signaling has a high priority, for example a beam configured by an OAM has a high priority, and/or, a semi-statically indicated beam has a high priority, and/or, a dynamically indicated beam has a high priority.

In some of the embodiments, the priority may be expressed as a priority of a forwarded signal: the forwarded signal itself has a priority.

For example, a signal that may have a high priority includes at least one of the following: SS, SSB, SIB, MIB, RACH, PDCCH for scheduling Msg2 and/or Msg3 and/or Msg4 and/or Msg5, PDSCH for carrying Msg2 and/or Msg4, PUSCH for carrying Msg3 and/or Msg5, CSIRS, or SRS, etc. Of course, it may further be a signal other than the above signals, the present disclosure is not limited to these.

For another example, NCR may distinguish a signal with a higher priority, and when a beam used to forward the signal conflicts with other beams, the NCR performs transmission and/or reception by using the beam for forwarding the signal.

For another example, NCR may distinguish a signal with a higher priority and some or all other signals, and when a beam used to forward the signal conflicts with other beams (for example it is used to forward some or all other signals, or a beam of which a forwarding signal is uncertain), the NCR performs transmission and/or reception by using the beam for forwarding the signal.

For another example, a beam failure report (BFR) signal of a terminal equipment served by the NCR may also have a higher priority. In this way, the network side timely receives BFR of a terminal side and performs appropriate processing, to prevent further larger link failure, etc.

For a further example, a signal priority is indicated by the network side.

In some of the embodiments, the priority may be expressed as a priority of indication/configuration information or signaling.

For example, a beam configured by an OAM has a high priority, and/or, a semi-statically indicated beam has a high priority, and/or, a dynamically indicated beam has a high priority.

For another example, most of the important signals in the above examples are mostly related to key processes and capabilities such as initial access, channel tracking, and channel measurement of a served terminal equipment. Therefore, semi-static signaling or signaling configured by the OAM may have a higher priority.

For a further example, when a terminal equipment served by NCR has service that requires higher reliability and delay, a network side may transmit dynamic signaling to indicate a new transmission beam for the NCR. In this situation, the priority may be divided into three categories, for example, a priority of a beam used to forward an SSB and so on is the highest, followed by a priority of dynamic rewriting, and a priority of other indication is lower.

In some of the embodiments, the priority may be expressed as a priority of a forwarding direction: the forwarding direction has a priority.

For example, a beam conflict may occur between uplink forwarding and downlink forwarding. A downlink forwarding beam may take precedence, has a higher priority at a network side in communication, which may guarantee services of more terminal equipments served by the network device.

For another example, in a beam forwarding direction conflict, an uplink forwarding beam may take precedence, so that the network side timely obtains information requested or reported by a terminal equipment served by the NCR.

In some of the embodiments, the priority may be expressed as a priority of a time unit/time period used or forwarded by this beam.

For example, NCR may determine (according to a received indication, or system information acquired by itself) when more important signals may need to be forwarded, these times or time periods have a higher priority, and beams related to these times or time periods have a higher priority in a beam conflict.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a repeater obtains first information; and the repeater determines to perform, by using a first beam over a first time, reception or transmission on an access link (AC) at least according to the first information and/or a communication standard definition rule. Thereby, the repeater is capable of determining forwarding on the AC link according to the first information and/or the rules defined in communication standards, which may better strengthen signal coverage and cope with changes of an environment and main services of a cell, thus the transmission efficiency of the entire network may be improved.

### Embodiments of a second aspect

Embodiments of the present disclosure provide a repeater, the repeater may be e.g. the aforementioned NCR, or may be a network device or a terminal equipment having a forwarding function, or may be one or more parts or components configured in the NCR, the network device or the terminal equipment.

FIG. 6 is a schematic diagram of a repeater in the embodiments of a third aspect of the present disclosure. The principle of the repeater to solve a problem is the same as the method in the embodiments of the first aspect, thus its specific implementation may refer to the embodiments of the first aspect, the same contents will not be repeated.

As shown in FIG. 6, a repeater 600 in the embodiments of the present disclosure includes:
an acquiring unit 601 configured to acquire first information; and
a determining unit 602 configured to determine to perform, by using a first beam over a first time, receptions or transmissions on an access link (AC) at least according to the first information and/or a communication standard definition rule.

In some of the embodiments, the determining unit 602 determines the first beam and/or the first time according to at least one of the following: the communication standard definition rule, dynamic signaling, semi-static signaling, or operation administration and maintenance (OAM) configuration information.

In some of the embodiments, the first time includes at least one time unit, the at least one time unit being continuous or not continuous in a time domain.

In some of the embodiments, the first information is carried by semi-static signaling, and/or, the first information is configured by an OAM entity, and/or, the first information is carried by a PDCCH or dynamic signaling.

In some of the embodiments, the first information is used to indicate the first time, and/or, the first information is used to indicate the first beam, and/or, the first information is used to indicate the repeater to perform reception or transmission on the access link.

In some of the embodiments, the indication of the first beam is based on a beam index, and/or, the indication of the first beam is based on a synchronous signal block (SSB) index, and/or, the indication of the first beam is based on a reference signal index.

In some of the embodiments, the first information is used to indicate the repeater to perform reception or transmission on the access link by using the first beam over the first time.

In some of the embodiments, the first information is used to indicate the first time and the first beam; and
the acquiring unit 601 further acquires second information, the second information being at least used for the determining unit 602 to determine to perform, by using the first beam over the first time, reception or transmission on the access link.

In some of the embodiments, the second information at least indicates that the first time includes an uplink time unit and/or a downlink time unit and/or a flexible time unit.

In some of the embodiments, the second information includes time division duplex (TDD) uplink and downlink configuration information, the second information is carried by dynamic signaling and/or semi-static signaling, and/or, the second information is configured by an OAM entity.

In some of the embodiments, the determining unit 602 determines to perform reception on the access link by using the first beam at an uplink time unit of the first time, and/or,
the determining unit 602 determines to perform transmission on the access link by using the first beam at a downlink time unit of the first time, and/or,
the determining unit 602 determines to perform reception or transmission on the access link by using the first beam over at least one flexible time unit of the first time, and/or,
the determining unit 602 determines not to perform reception and transmission on the access link over at least one flexible time unit of the first time.

In some of the embodiments, the first information is used to indicate the first time, the first time being related to a first signal.

In some of the embodiments, the first signal is not generated by the repeater, and/or, the repeater does not demodulate and decode the first signal.

In some of the embodiments, the determining unit 602 determines the first beam, the first beam being related to the first signal; the determining unit 602 determines to receive or transmit the first signal on the access link by using the first beam over the first time.

In some of the embodiments, the first signal at least includes an SSB whose index is n;
the first information includes system information, and the first time at least includes a time unit corresponding to the SSB index n.

In some of the embodiments, the determining unit 602 determines the SSB index n for performing transmission on the access link.

In some of the embodiments, the SSB index n is configured or indicated by a network side, and/or, the SSB index n is pre-defined by a communication standard, and/or, the SSB index n is pre-set in the repeater.

In some of the embodiments, the determining unit 602 determines the first beam for transmitting the SSB whose index is n on the access link.

In some of the embodiments, the determining unit 602 determines the number N of SSBs for being transmitted on the access link and/or indexes of N SSBs, the SSB index n is one of the indexes of N SSBs;
the number N of SSBs and/or the indexes of N SSBs is/are pre-set, or, the number N of SSBs and/or the indexes of N SSBs is/are pre-defined by a communication standard, or, the number N of SSBs and/or the indexes of N SSBs is/are configured or indicated by a network side for the repeater.

In some of the embodiments, a value of the number N of SSBs is pre-set, wherein the repeater reports the number N of SSBs to the network side; indexes of the N SSBS are configured/indicated by the network side for the repeater.

In some of the embodiments, the determining unit 602 determines N beams for transmitting N SSBs on the access link, and determines a corresponding relation between the N beams and the N SSBs.

In some of the embodiments, the determining unit 602 determines N beams for transmitting the N SSBs on the access link according to a network side configuration and/or indication, or, the determining unit 602 determines N beams for transmitting the N SSBs on the access link according to a communication standard definition rule, or, the determining unit 602 determines by itself N beams for transmitting the N SSBs on the access link.

In some of the embodiments, the first beam corresponds to the SSB index n one by one, and the one-to-one corresponding relation remains unchanged until the repeater is restarted and/or reconfigured.

In some of the embodiments, the first time further includes a time unit or a random access occasion (RACH occasion), corresponding to the SSB index n, for transmitting a random access preamble (RACH preamble);
the first signal further includes a signal transmitted using a time-domain and/or frequency-domain resource corresponding to a time unit or a random access occasion (RACH occasion), corresponding to the SSB index n, for transmitting a random access preamble (RACH preamble).

In some of the embodiments, the first signal includes at least one of the following signals or channels or information, or, the first signal is related to at least one of the following signals or channels or information:
a synchronization signal (SS),
a synchronization signal block (SSB),
a system information block (SIB),
a main information block (MIB),
Msg1 (a random access channel, RACH),
Msg2,
Msg3,
Msg4,
Msg5,
a physical downlink control channel (PDCCH) for scheduling (or triggering) Msg1 and/or Msg2 and/or Msg3 and/or Msg4 and/or Msg5,
a physical downlink shared channel (PDSCH) for carrying Msg2 and/or Msg4,
a physical uplink shared channel (PUSCH) for carrying Msg3 and/or Msg5,
a channel state information reference signal (CSIRS),
a sounding reference signal (SRS),
beam failure recovery (BFR),
a physical uplink control channel (PUCCH) for carrying beam failure recovery (BFR),
ACK/NACK information,
a physical uplink control channel (PUCCH) for carrying ACK/NACK information,
a scheduling request (SR), or
a physical uplink control channel (PUCCH) for carrying an SR.

In some of the embodiments, the determining unit 602, at least according to the first information, determines to receive or transmit the first signal on the access link by using the first beam over the first time.

In some of the embodiments, the first information includes position information of a time domain and/or frequency domain where the first signal is located, and/or, the first information is carried by one or more signaling.

In some of the embodiments, the first information at least includes system information;

In some of the embodiments, the determining unit 602, at least according to the first information, determines to receive or transmit a signal related to the first signal over the first time.

In some of the embodiments, the acquiring unit 601 acquires third information, the third information being related to a second time, the second time and the first time at least partially overlapping;
the third information being further used to indicate a second beam to be forwarded by the repeater on the access link, and/or, the third information being further used to indicate a forwarding direction of the repeater on the access link within the at least partially overlapping time, and/or, the third information being further used to indicate a transmission direction and/or an on-off state related to the at least partially overlapping time.

In some of the embodiments, the second beam is different from the first beam, and/or,
the forwarding direction within the at least partially overlapping time is inconsistent with a direction of forwarding on the access link within the first time determined by the repeater, and/or,
the transmission direction and/or the on-off state related to the at least partially overlapping time is/are inconsistent with the direction of forwarding on the access link within the first time determined by the repeater.

In some of the embodiments, the third information is at least used to indicate the repeater to perform forwarding on the access link by using the second beam over the second time, the forwarding direction is consistent or inconsistent with the forwarding direction determined by the repeater over the first time, and the second beam is identical to or different from the first beam.

As shown in FIG. 6, the repeater 600 further includes:
a forwarding unit 603 configured to perform reception or transmission on the access link over the first time by using the first beam.

In some of the embodiments, the determining unit 602 determines to perform reception on the access link by using the first beam over the first time at least according to the first information, the third information is used to indicate the repeater to perform reception on the access link by using the second beam over the second time,
the forwarding unit 603 performs reception on the access link by using the first beam over the first time.

In some of the embodiments, the determining unit 602 determines to perform transmission on the access link by using the first beam over the first time at least according to the first information, the third information is used to indicate the repeater to perform transmission on the access link by using the second beam over the second time,
the forwarding unit 603 performs transmission on the access link by using the first beam over the first time.

In some of the embodiments, the determining unit 602 determines to perform reception on the access link by using the first beam over the first time at least according to the first information, the third information is used to indicate the repeater to perform transmission on the access link by using the second beam over the second time,
the forwarding unit 603 performs reception on the access link by using the first beam over the first time.

In some of the embodiments, the determining unit 602 determines to perform transmission on the access link by using the first beam over the first time at least according to the first information, the third information is used to indicate the repeater to perform reception on the access link by using the second beam over the second time,
the forwarding unit 603 performs transmission on the access link by using the first beam over the first time.

In some of the embodiments, a priority of the first beam is higher or equal to a priority of the second beam.

In some of the embodiments, a priority of the first beam is configured and/or indicated by a network side, or the priority of the first beam is defined by a communication standard, or the priority of the first beam is determined by the repeater at least according to the first information.

In some of the embodiments, a priority of at least one time unit included by the first time is higher than or equal to a preset priority, or is higher than or equal to a priority of any time unit in the second time, or is higher than or equal to a priority of any time unit in the at least partially overlapping time.

In some of the embodiments, a priority of the time unit is configured and/or indicated by the network side, or the priority of the time unit is defined by the communication standard, or the priority of the time unit is determined at least by a signal associated with the time unit.

In some of the embodiments, the third information is further used to indicate a second beam forwarded by the repeater on the access link, wherein,
the third information indicates the repeater to receive or transmit a second signal on the access link by using the second beam over the second time; a priority of the second signal is lower than or equal to a priority of the first signal.

In some of the embodiments, a priority of the first signal and/or the second signal is/are defined by a communication standard, or the priority of the first signal and/or the second signal is/are configured and/or indicated by a network side.

In some of the embodiments, the priority of the first signal is highest.

In some of the embodiments, the first information is carried by semi-static signaling and/or configured by an OAM entity, and the third information is carried by dynamic signaling.

In some of the embodiments, the first information is carried by dynamic signaling, the third information is carried by semi-static signaling and/or carried dynamic signaling and/or indicated by an OAM;
the semi-static signaling includes an MAC CE and/or RRC signaling;
the repeater receives the third information before receiving the first information.

In some of the embodiments, the first information is carried by semi-static signaling, the third information is carried by semi-static signaling and/or indicated by an OAM and/or carried by dynamic signaling;
the semi-static signaling includes an MAC CE and/or RRC signaling;
the repeater receives the third information before receiving the first information.

In some of the embodiments, the third information is further used to indicate the transmission direction and/or the on-off state related to the at least partially overlapping time, wherein,
the third information is at least used to indicate a signal transmission direction of one time unit of the at least partially overlapping time, and wherein the signal transmission direction of the one time unit is inconsistent with a signal transmission direction on the access link using the first beam over the first time, determined by the repeater according to the first information.

In some of the embodiments, the forwarding unit 603 performs reception or transmission on the access link by using the first beam over the first time.

In some of the embodiments, the determining unit 602 determines to perform reception (uplink) on the access link by using the first beam over the first time, and the third information is at least used to indicate one time unit in the at least partially overlapping time as a downlink time unit or a flexible time unit.

In some of the embodiments, the determining unit 602 determines to perform transmission (downlink) on the access link by using the first beam over the first time, and the third information is at least used to indicate one time unit in the at least partially overlapping time as an uplink time unit or a flexible time unit.

In some of the embodiments, the forwarding unit 603 does not perform reception and/or does not perform transmission on the access link within a time unit at which the signal transmission directions are inconsistent.

In some of the embodiments, the determining unit 602 determines to perform reception (uplink) on the access link by using the first beam over the first time, and the third information is at least used to indicate one of time units included in the first time as a downlink time unit or a flexible time unit;
the forwarding unit 603 does not perform reception at the downlink time unit or flexible time unit, or, does not perform reception over the first time.

In some of the embodiments, the determining unit 602 determines to perform transmission (downlink) on the access link by using the first beam over the first time, and the third information is at least used to indicate one of time units included in the first time as an uplink time unit or a flexible time unit;
the forwarding unit 603 does not perform transmission at the uplink time unit or flexible time unit, or, does not perform transmission over the first time.

In some of the embodiments, the third information is at least used to indicate that at least one time unit in time units included in the first time is not used for reception or transmission.

In some of the embodiments, the forwarding unit 603 performs reception or transmission on the access link by using the first beam over the first time.

In some of the embodiments, the forwarding unit 603 does not perform reception and/or not to perform transmission on the access link within the time unit indicated as being not used for reception or transmission.

In some of the embodiments, the third information is carried by signaling, the signaling is at least used to indicate the OFF time.

In some of the embodiments, the signaling is further used to indicate an uplink time unit, and/or a downlink time unit, and/or a flexible time unit.

In some of the embodiments, the at least one time unit not used for reception or transmission is an OFF time unit, or a sleep/dormancy time unit, or a null time unit.

In some of the embodiments, the acquiring unit 601 acquires fourth information, the fourth information being related to a third time, the third time and the first time at least partially overlapping.

In some of the embodiments, the fourth information is at least used to indicate the repeater to receive a signal from a network side or transmit a signal to the network side on a control link over the third time.

In some of the embodiments, the forwarding unit 603 receives a signal from the network side or transmits a generated signal to the network side on the control link over the third time.

In some of the embodiments, the repeater determines to perform reception on the access link by using the first beam over the first time at least according to the first information, the fourth information is used to indicate the repeater to perform reception on the control link over the third time;
the forwarding unit 603 does not perform reception on the access link at the at least partially overlapping time.

In some of the embodiments, the determining unit 602 determines to perform transmission on the access link by using the first beam over the first time at least according to the first information, the fourth information is used to indicate the repeater to perform transmission on the control link over the third time;
the forwarding unit 603 does not perform transmission on the access link at the at least partially overlapping time.

In some of the embodiments, the determining unit 602 determines to perform reception on the access link by using the first beam over the first time at least according to the first information, the fourth information is used to indicate the repeater to perform reception on the control link over the third time;
the forwarding unit 603 does not perform reception on the access link over the first time.

In some of the embodiments, the determining unit 602 determines to perform transmission on the access link by using the first beam over the first time at least according to the first information, the fourth information is used to indicate the repeater to perform transmission on the control link over the third time;
the forwarding unit 603 does not perform transmission on the access link over the first time.

In some of the embodiments, the forwarding unit 603 performs reception or transmission on the access link by using the first beam over the first time.

In some of the embodiments, the determining unit 602 determines to perform reception on the access link by using the first beam over the first time at least according to the first information, the fourth information is used to indicate the repeater to receive a signal from a network side on the control link over the third time;
the forwarding unit 603 does not receive the signal from the network side on the control link at the at least partially overlapping time.

In some of the embodiments, the determining unit 602 determines to perform transmission on the access link by using the first beam over the first time at least according to the first information, the fourth information is used to indicate the repeater to transmit a signal to a network side on the control link over the third time;
the forwarding unit 603 does not transmit the signal to the network side on the control link over the at least partially overlapping time.

In some of the embodiments, the determining unit 602 determines to perform reception on the access link by using the first beam over the first time at least according to the first information, the fourth information is used to indicate the repeater to receive a signal from a network side on the control link over the third time;
the forwarding unit 603 does not receive the signal from the network side on the control link over the third time.

In some of the embodiments, the determining unit 602 determines to perform transmission on the access link by using the first beam over the first time at least according to the first information, the fourth information is used to indicate the repeater to transmit a signal to a network side on the control link over the third time;
the forwarding unit 603 does not transmit the signal to the network side on the control link over the third time.

In some of the embodiments, the fourth information is used to indicate the repeater to generate and transmit to a network side at least one of the following signals over the third time:
Msg1 (RACH, preamble);
BFR,
SR,
A/N,
SRS,
Msg3,
Msg5,
non-periodic CSI report, or
semi-persistent CSI report.

In some of the embodiments, the fourth information is used to indicate the repeater to receive from a network side at least one of the following signals over the third time:
Msg2,
Msg4,
PDCCH that schedules Msg2 and/or Msg4,
CSIRS, or
BFRR;
and the signal is demodulated or decoded by the repeater.

In some of the embodiments, the repeater does not expect to be indicated with indication information inconsistent with the first information.

In some of the embodiments, the repeater does not expect to be indicated to perform transmission or reception by using a beam other than the first beam over the first time.

In some of the embodiments, the repeater does not expect to be indicated that the first time is an OFF time.

In some of the embodiments, in a case where the first information is at least used to indicate the repeater to perform reception on the access link by using the first beam over the first time, the repeater does not expect to be indicated that the first time includes a downlink time unit and/or a flexible time unit;
and/or
in a case where the first information is at least used to indicate the repeater to perform transmission on the access link by using the first beam over the first time, the repeater does not expect to be indicated that the first time includes an uplink time unit and/or a flexible time unit.

Moreover, for the sake of simplicity, FIG. 6 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a repeater obtains first information; and the repeater determines to perform reception or transmission on an access link (AC) by using a first beam over a first time at least according to the first information and/or a communication standard definition rule. Thereby, the repeater is capable of determining forwarding of the AC link according to the first information and/or the communication standard definition rule, which may better strengthen signal coverage and cope with changes of an environment and main services in a cell, thus the transmission efficiency of the entire network may be improved.

### Embodiments of a third aspect

The embodiments of the present disclosure provide an information indication method, which is described from a network device side, the contents same as the embodiments of the first aspect are not repeated.

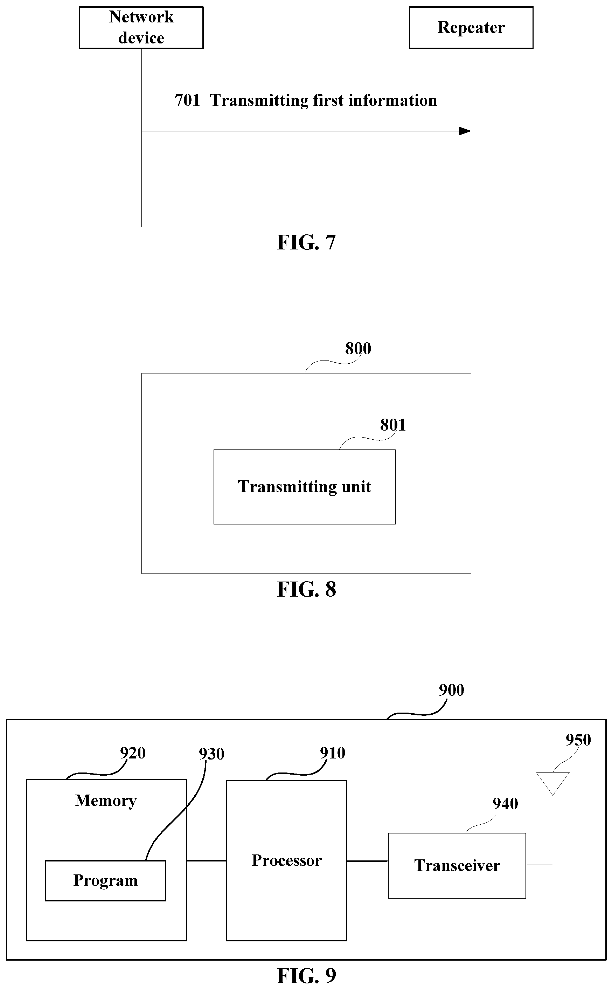

FIG. 7 is a schematic diagram of an information indication method in the embodiments of the present disclosure, as shown in FIG. 7, the method includes:
701, a network device transmits first information to a repeater,
wherein the repeater determines to perform reception or transmission on an access link (AC) by using a first beam over a first time at least according to the first information and/or a communication standard definition rule.

It should be noted that the above FIG. 7 is only schematic description of the embodiments of the present disclosure, but the present disclosure is not limited to this. For example, an execution order of each operation may be adjusted appropriately, moreover some other operations may be added or one or more operations may be removed. Persons skilled in the art may make appropriate modifications according to the above contents, not limited to the above FIG. 7.

In some of the embodiments, the network device may transmit a forwarded signal to the repeater (for example, a destination is a terminal equipment, forwarded by the repeater) and/or a communication signal (for example, the destination is the repeater), or, the network device may further receive a forwarded signal from the repeater (for example, generated and transmitted by the terminal equipment, and forwarded by the repeater) and/or a communication signal (for example, generated and transmitted by the repeater).

In some of the embodiments, the first time includes at least one time unit, the at least one time unit being continuous or not continuous in a time domain.

In some of the embodiments, the first information is carried by semi-static signaling, and/or, the first information is configured by an OAM entity, and/or, the first information is carried by a PDCCH or dynamic signaling.

In some of the embodiments, the first information is used to indicate the first time, and/or, the first information is used to indicate the first beam, and/or, the first information is used to indicate the repeater to perform reception or transmission on the access link.

In some of the embodiments, the indication of the first beam is based on a beam index, and/or, the indication of the first beam is based on a synchronous signal block (SSB) index, and/or, the indication of the first beam is based on a reference signal index.

In some of the embodiments, the first information is used to indicate the repeater to perform reception or transmission on the access link by using the first beam over the first time.

In some of the embodiments, the first information is used to indicate the first time and the first beam; and
the network device transmits second information to the repeater, the second information being at least used for the repeater to determine to perform reception or transmission on the access link by using the first beam over the first time.

In some of the embodiments, the second information at least indicates that the first time includes an uplink time unit and/or a downlink time unit and/or a flexible time unit.

In some of the embodiments, the second information includes time division duplex (TDD) uplink and downlink configuration information, the second information is carried by dynamic signaling and/or semi-static signaling, and/or, the second information is configured by an OAM entity.

In some of the embodiments, the first information is used to indicate the first time, the first time being related to a first signal.

In some of the embodiments, the first signal is not generated by the repeater, and/or, the repeater does not demodulate and decode the first signal.

In some of the embodiments, the network device transmits third information to the repeater, the third information being related to a second time, the second time and the first time at least partially overlapping;
the third information being further used to indicate a second beam to be forwarded by the repeater on the access link, and/or, the third information being further used to indicate a forwarding direction of the repeater on the access link within the at least partially overlapping time, and/or, the third information being further used to indicate a transmission direction and/or an on-off state related to the at least partially overlapping time.

In some of the embodiments, the second beam is different from the first beam, and/or,
the forwarding direction within the at least partially overlapping time is inconsistent with a direction of forwarding on the access link within the first time determined by the repeater, and/or,
the transmission direction and/or the on-off state related to the at least partially overlapping time is/are inconsistent with the direction of forwarding on the access link within the first time determined by the repeater.

In some of the embodiments, the first information is carried by semi-static signaling and/or configured by an OAM entity, and the third information is carried by dynamic signaling.

In some of the embodiments, the first information is carried by dynamic signaling, the third information is carried by semi-static signaling and/or carried dynamic signaling and/or indicated by an OAM;
the semi-static signaling includes an MAC CE and/or RRC signaling;
the repeater receives the third information before receiving the first information.

In some of the embodiments, the first information is carried by semi-static signaling, the third information is carried by semi-static signaling and/or indicated by an OAM and/or carried by dynamic signaling;
the semi-static signaling includes an MAC CE and/or RRC signaling;
the repeater receives the third information before receiving the first information.

In some of the embodiments, the network device transmits fourth information to the repeater, the fourth information being related to a third time, the third time and the first time at least partially overlapping.

In some of the embodiments, the fourth information is at least used to indicate the repeater to receive a signal from a network side or transmit a signal to the network side on a control link over the third time.

In some of the embodiments, the fourth information is used to indicate the repeater to generate and transmit to a network side at least one of the following signals over the third time:
Msg1 (RACH, preamble);
BFR,
SR,
A/N,
SRS,
Msg3,
Msg5,
non-periodic CSI report, or
semi-persistent CSI report.

In some of the embodiments, the fourth information is used to indicate the repeater to receive from a network side at least one of the following signals over the third time:
Msg2,
Msg4,
PDCCH that schedules Msg2 and/or Msg4,
CSIRS, or
BFRR;
and the signal is demodulated or decoded by the repeater.

In some of the embodiments, a network side does not transmit indication information inconsistent with the first information;

In some of the embodiments, the network side does not indicate the repeater to perform transmission or reception by using a beam other than the first beam over the first time.

In some of the embodiments, the network side does not indicate that the first time is an OFF time.

In some of the embodiments, in a case where the first information is at least used to indicate the repeater to perform reception on the access link by using the first beam over the first time, the network side does not indicate that the first time includes a downlink time unit and/or a flexible time unit;
and/or
in a case where the first information is at least used to indicate the repeater to perform transmission on the access link by using the first beam over the first time, the network side does not indicate that the first time includes an uplink time unit and/or a flexible time unit.

The above only describes each step or process related to the present disclosure, but the present disclosure is not limited to this. The method in the embodiments of the present disclosure may further include other steps or processes. For specific contents of these steps or processes, relevant technologies may be referred to.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a network device transmits first information to a repeater; and the repeater determines to perform reception or transmission on an access link (AC) by using a first beam over a first time at least according to the first information and/or a communication standard definition rule. Thereby, the repeater is capable of determining forwarding of the AC link according to the first information and/or the communication standard definition rule, which may better strengthen signal coverage and cope with changes of an environment and main services in a cell, thus the transmission efficiency of the entire network may be improved.

### Embodiments of a fourth aspect

The embodiments of the present disclosure provide a network device.

FIG. 8 is a schematic diagram of a network device in the embodiments of a third aspect of the present disclosure. The principle of the network device to solve a problem is the same as the method in the embodiments of the third aspect, thus its specific implementation can refer to the embodiments of the third aspect, the same contents will not be repeated.

As shown in FIG. 8, a network device 800 in the embodiments of the present disclosure includes:
a transmitting unit 801 configured to transmit first information to a repeater,
wherein the repeater determines to perform reception or transmission on an access link by using a first beam over a first time at least according to the first information and/or a communication standard definition rule.

In some of the embodiments, the network device may transmit a forwarded signal to the repeater (for example, a destination is a terminal equipment, forwarded by the repeater) and/or a communication signal (for example, the destination is the repeater), or, the network device may further receive a forwarded signal from the repeater (for example, generated and transmitted by the terminal equipment, and forwarded by the repeater) and/or a communication signal (for example, generated and transmitted by the repeater).

In some of the embodiments, the transmitting unit 801 transmits second information to the repeater, the second information being at least used for the repeater to determine to perform reception or transmission on the access link by using the first beam over the first time.

In some of the embodiments, the transmitting unit 801 transmits third information to the repeater, the third information being related to a second time, the second time and the first time at least partially overlapping;
the third information being further used to indicate a second beam to be forwarded by the repeater on the access link, and/or, the third information being further used to indicate a forwarding direction of the repeater on the access link within the at least partially overlapping time, and/or, the third information being further used to indicate a transmission direction and/or an on-off state related to the at least partially overlapping time.

In some of the embodiments, the transmitting unit 801 transmits fourth information to the repeater, the fourth information being related to a third time, the third time and the first time at least partially overlapping.

In some of the embodiments, the fourth information is at least used to indicate the repeater to receive a signal from a network side or transmit a signal to the network side on a control link over the third time.

It's worth noting that the above only describes components or modules related to the present disclosure, but the present disclosure is not limited to this. The network device 800 in the embodiments of the present disclosure may further include other components or modules. For detailed contents of these components or modules, relevant technologies can be referred to.

Moreover, for the sake of simplicity, FIG. 8 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a network device transmits first information to a repeater; and the repeater determines to perform reception or transmission on an access link (AC) by using a first beam over a first time at least according to the first information and/or a communication standard definition rule. Thereby, the repeater is capable of determining forwarding of the AC link according to the first information and/or the communication standard definition rule, which may better strengthen signal coverage and cope with changes of an environment and main services in a cell, thus the transmission efficiency of the entire network may be improved.

### Embodiments of a fifth aspect

The embodiments of the present disclosure provide a communication system. FIG. 1 is a schematic diagram of a communication system in the embodiments of the present disclosure. As shown in FIG. 1, the communication system 100 includes a network device 101, a repeater 102 and a terminal equipment 103. For the sake of simplicity, FIG. 1 only takes a network device, a repeater and a terminal equipment as examples to describe, but the embodiments of the present disclosure are not limited to this.

In the embodiments of the present disclosure, transmission of existing or further implementable services can be carried out between the network device 101 and the terminal equipment 103. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on. The repeater 102 is configured to perform the information indication method described in the embodiments of the first aspect, and the network device 101 is configured to perform the information indication method described in the embodiments of the third aspect, their contents are incorporated here and are not repeated here.

The embodiments of the present disclosure further provide an electronic device, the electronic device e.g. is a repeater or a network device.

FIG. 9 is a schematic diagram of composition of an electronic device in the embodiments of the present disclosure. As shown in FIG. 9, an electronic device 900 may include: a processor 910 (such as a central processing unit (CPU)) and a memory 920; the memory 920 is coupled to the processor 910. The memory 920 may store various data; moreover, further stores a program 930 for information processing, and executes the program 930 under the control of the processor 910.

For example, the processor 910 may be configured to execute a program to implement the information indicating method as described in the embodiments of the first aspect. For example, the processor 910 may be configured to perform the following control: acquiring first information; and determining to perform reception or transmission on an access link (AC), by using a first beam over a first time at least according to the first information and/or a communication standard definition rule.

For another example, the processor 910 may be configured to execute a program to implement the information indication method as described in the embodiments of the third aspect. For example, the processor 910 may be configured to perform the following control: transmitting first information to a repeater; enabling the repeater to determine to perform reception or transmission on an access link (AC) by using a first beam over a first time at least according to the first information and/or a communication standard definition rule.

In addition, as shown in FIG. 9, the electronic device 900 may further include: a transceiver 940 and an antenna 950, etc., wherein the functions of said components are similar to relevant arts, which are not repeated here. It's worth noting that the electronic device 900 does not have to include all the components shown in FIG. 9. Moreover, the electronic device 900 may also include components not shown in FIG. 9, prior arts may be referred to.

The embodiments of the present disclosure further provide a computer readable program, wherein when the program is executed in a repeater, the program enables a computer to execute the information indication method as described in the embodiments of the first aspect, in the repeater.

The embodiments of the present disclosure further provide a storage medium in which a computer readable program is stored, wherein the computer readable program enables a computer to execute the information indication method as described in the embodiments of the first aspect, in a repeater.

The embodiments of the present disclosure further provide a computer readable program, wherein when a network device executes the program, the program enables a computer in the network device to execute the information indication method described in the embodiments of the third aspect.

The embodiments of the present disclosure further provide a storage medium in which a computer readable program is stored, wherein the computer readable program enables a computer to execute the information indication method as described in the embodiments of the third aspect, in a network device.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/apparatus described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. An information indication method, including:
   acquiring, by a repeater, first information; and
   determining, by the repeater, to perform reception or transmission on an access link (AC) by using a first beam over a first time at least according to the first information and/or a communication standard definition rule.
2. The method according to Supplement 1, wherein the method further includes:
   determining, by the repeater, the first beam and/or the first time according to at least one of the following: the communication standard definition rule, dynamic signaling, semi-static signaling, or operation administration and maintenance (OAM) configuration information.
3. The method according to Supplement 1 or 2, wherein the method further includes:
   the first time includes at least one time unit, the at least one time unit being continuous or not continuous in a time domain.
4. The method according to any one of Supplements 1 to 3, wherein
   the first information is carried by semi-static signaling, and/or, the first information is configured by an OAM entity, and/or, the first information is carried by a PDCCH or dynamic signaling.
5. The method according to any one of Supplements 1 to 4, wherein
   the first information is used to indicate the first time, and/or, the first information is used to indicate the first beam, and/or, the first information is used to indicate the repeater to perform reception or transmission on the access link.
6. The method according to any one of Supplements 1 to 5, wherein
   the indication of the first beam is based on a beam index, and/or, the indication of the first beam is based on a synchronous signal block (SSB) index, and/or, the indication of the first beam is based on a reference signal index.
7. The method according to any one of Supplements 1 to 6, wherein
   the first information is used to indicate the repeater to perform reception or transmission on the access link by using the first beam over the first time.
8. The method according to any one of Supplements 1 to 6, wherein
   the first information is used to indicate the first time and the first beam; the method further includes:
   the repeater acquires second information, the second information being at least used for the repeater to determine to perform reception or transmission on the access link by using the first beam over the first time.
9. The method according to Supplement 8, wherein
   the second information at least indicates that the first time includes an uplink time unit and/or a downlink time unit and/or a flexible time unit.
10. The method according to Supplement 8 or 9, wherein
   the second information includes time division duplex (TDD) uplink and downlink configuration information, the second information is carried by dynamic signaling and/or semi-static signaling, and/or, the second information is configured by an OAM entity.
11. The method according to Supplement 9, wherein
   the repeater determines to perform reception on the access link by using the first beam at an uplink time unit of the first time, and/or,
   the repeater determines to perform transmission on the access link by using the first beam at a downlink time unit of the first time, and/or,
   the repeater determines to perform reception or transmission on the access link by using the first beam over at least one flexible time unit of the first time, and/or,
   the repeater determines not to perform reception and transmission on the access link over at least one flexible time unit of the first time.
12. The method according to any one of Supplements 1 to 6, wherein
   the first information is used to indicate the first time, the first time being related to a first signal.
13. The method according to Supplement 12, wherein the first signal is not generated by the repeater, and/or, the repeater does not demodulate and decode the first signal.
14. The method according to Supplement 12 or 13, wherein
   the repeater determines the first beam, and the first beam is related to the first signal; and
   the repeater determines to receive or transmit the first signal on the access link by using the first beam over the first time.
15. The method according to Supplement 14, wherein
   the first signal at least includes an SSB whose index is n;
   the first information includes system information, and the first time at least includes a time unit corresponding to the SSB index n.
16. The method according to Supplement 15, wherein the method further includes:
   the repeater determines the SSB index n for performing transmission on the access link.
17. The method according to Supplement 16, wherein
   the SSB index n is configured or indicated by a network side, and/or, the SSB index n is pre-defined by a communication standard, and/or, the SSB index n is pre-set in the repeater.
18. The method according to any one of Supplements 15 to 17, wherein the method further includes:
   the repeater determines the first beam for transmitting the SSB whose index is n on the access link.
19. The method according to any one of Supplements 15 to 18, wherein the method further includes:
   the repeater determines the number N of SSBs for being transmitted on the access link and/or indexes of N SSBs, the SSB index n is one of the indexes of N SSBs;
   the number N of SSBs and/or the indexes of N SSBs is/are pre-set, or, the number N of SSBs and/or the indexes of N SSBs is/are pre-defined by a communication standard, or, the number N of SSBs and/or the indexes of N SSBs is/are configured or indicated by a network side for the repeater.
20. The method according to Supplement 19, a value of the number N of SSBs is preset, wherein the method further includes:
   the repeater reports the number N of SSBs to the network side.
21. The method according to Supplement 19 or 20, wherein the method further includes:
   the repeater determines N beams for transmitting the N SSBs on the access link, and determines a corresponding relation between the N beams and the N SSBs.
22. The method according to Supplement 21, wherein
   the repeater determines N beams for transmitting the N SSBs on the access link according to a network side configuration and/or indication, or, the repeater determines N beams for transmitting the N SSBs on the access link according to a communication standard definition rule, or, the repeater determines by itself N beams for transmitting the N SSBs on the access link.
23. The method according to any one of Supplements 15 to 22, wherein
   the first beam corresponds to the SSB index n one by one, and the one-to-one corresponding relation remains unchanged until the repeater is restarted and/or reconfigured.
24. The method according to any one of Supplements 15 to 23, wherein
   the first time further includes a time unit or a random access occasion (RACH occasion), corresponding to the SSB index n, for transmitting a random access preamble (RACH preamble);
   the first signal further includes a signal transmitted using a time-domain and/or frequency-domain resource corresponding to a time unit or a random access occasion (RACH occasion), corresponding to the SSB index n, for transmitting a random access preamble (RACH preamble).
25. The method according to any one of Supplements 12 to 24, wherein
   the first signal includes at least one of the following signals or channels or information, or, the first signal is related to at least one of the following signals or channels or information:
   a synchronization signal (SS),
   a synchronization signal block (SSB),
   a system information block (SIB),
   a main information block (MIB),
   Msg1 (a random access channel, RACH),
   Msg2,
   Msg3,
   Msg4,
   Msg5,
   a physical downlink control channel (PDCCH) for scheduling (or triggering) Msg1 and/or Msg2 and/or Msg3 and/or Msg4 and/or Msg5,
   a physical downlink shared channel (PDSCH) for carrying Msg2 and/or Msg4,
   a physical uplink shared channel (PUSCH) for carrying Msg3 and/or Msg5,
   a channel state information reference signal (CSIRS),
   a sounding reference signal (SRS),
   beam failure recovery (BFR),
   a physical uplink control channel (PUCCH) for carrying beam failure recovery (BFR),
   ACK/NACK information,
   a physical uplink control channel (PUCCH) for carrying ACK/NACK information,
   a scheduling request (SR), or
   a physical uplink control channel (PUCCH) for carrying an SR.
26. The method according to Supplement 25, wherein
   the repeater, at least based on the first information, determines to receive or transmit the first signal on the access link by using the first beam over the first time.
27. The method according to Supplement 25 or 26, wherein the first information includes position information of a time domain and/or frequency domain where the first signal is located, and/or, the first information is carried by one or more signaling.
28. The method according to any one of Supplements 25 to 27, wherein
   the first information at least includes system information; the method further includes:
   the repeater, at least according to the first information, determines to receive or transmit a signal related to the first signal over the first time.
29. The method according to any one of Supplements 1 to 28, wherein the method further includes:
   the repeater further acquires third information, the third information being related to a second time, the second time and the first time at least partially overlapping;
   the third information being further used to indicate a second beam to be forwarded by the repeater on the access link, and/or, the third information being further used to indicate a forwarding direction of the repeater on the access link within the at least partially overlapping time, and/or, the third information being further used to indicate a transmission direction and/or an on-off state related to the at least partially overlapping time.
30. The method according to Supplement 29, wherein
   the second beam is different from the first beam, and/or,
   the forwarding direction within the at least partially overlapping time is inconsistent with a direction of forwarding on the access link within the first time determined by the repeater, and/or,
   the transmission direction and/or the on-off state related to the at least partially overlapping time is/are inconsistent with the direction of forwarding on the access link within the first time determined by the repeater.
31. The method according to Supplement 29 or 30, wherein
   the third information is at least used to indicate the repeater to perform forwarding on the access link by using the second beam over the second time, the forwarding direction is consistent or inconsistent with the forwarding direction determined by the repeater over the first time, and the second beam is identical to or different from the first beam; the method further includes:
   the repeater uses the first beam over the first time to perform reception or transmission on the access link.
32. The method according to Supplement 31, wherein
   the repeater determines to perform reception on the access link by using the first beam over the first time at least according to the first information, the third information is used to indicate the repeater to perform reception on the access link by using the second beam over the second time, and
   the repeater performs reception on the access link by using the first beam over the first time.
33. The method according to Supplement 31, wherein
   the repeater determines to perform transmission on the access link by using the first beam over the first time at least according to the first information, the third information is used to indicate the repeater to perform transmission on the access link by using the second beam over the second time, and
   the repeater performs transmission on the access link by using the first beam over the first time.
34. The method according to Supplement 31, wherein
   the repeater determines to perform reception on the access link by using the first beam over the first time at least according to the first information, the third information is used to indicate the repeater to perform transmission on the access link by using the second beam over the second time, and
   the repeater performs reception on the access link by using the first beam over the first time.
35. The method according to Supplement 31, wherein
   the repeater determines to perform transmission on the access link by using the first beam over the first time at least according to the first information, the third information is used to indicate the repeater to perform reception on the access link by using the second beam over the second time, and
   the repeater performs transmission on the access link by using the first beam over the first time.
36. The method according to any one of Supplements 31 to 35, wherein a priority of the first beam is higher or equal to a priority of the second beam.
37. The method according to Supplement 36, wherein a priority of the first beam is configured and/or indicated by a network side, or the priority of the first beam is defined by a communication standard, or the priority of the first beam is determined by the repeater at least according to the first information.
38. The method according to any one of Supplements 31 to 37, wherein a priority of at least one time unit included by the first time is higher than or equal to a preset priority, or is higher than or equal to a priority of any time unit in the second time, or is higher than or equal to a priority of any time unit in the at least partially overlapping time.
39. The method according to Supplement 38, wherein a priority of the time unit is configured and/or indicated by the network side, or the priority of the time unit is defined by the communication standard, or the priority of the time unit is determined at least by a signal associated with the time unit.
40. The method according to any one of Supplements 31 to 39, wherein the third information is further used to indicate a second beam forwarded by the repeater on the access link, wherein,
   the third information indicates the repeater to receive or transmit a second signal on the access link by using the second beam over the second time; a priority of the second signal is lower than or equal to a priority of the first signal.
41. The method according to Supplement 40, wherein a priority of the first signal and/or the second signal is/are defined by a communication standard, or the priority of the first signal and/or the second signal is/are configured and/or indicated by a network side.
42. The method according to Supplement 40 or 41, wherein the first signal has the highest priority.
43. The method according to any one of Supplements 29 to 42, wherein the first information is carried by semi-static signaling and/or configured by an OAM entity, and the third information is carried by dynamic signaling.
44. The method according to any one of Supplements 29 to 42, wherein the first information is carried by dynamic signaling, the third information is carried by semi-static signaling and/or carried dynamic signaling and/or indicated by an OAM;
   the semi-static signaling includes an MAC CE and/or RRC signaling;
   the repeater receives the third information before receiving the first information.
45. The method according to any one of Supplements 29 to 42, wherein the first information is carried by semi-static signaling, the third information is carried by semi-static signaling and/or indicated by an OAM and/or carried by dynamic signaling;
   the semi-static signaling includes an MAC CE and/or RRC signaling;
   the repeater receives the third information before receiving the first information.
46. The method according to Supplement 29 or 30, wherein the third information is further used to indicate the transmission direction and/or the on-off state related to the at least partially overlapping time, wherein
   the third information is at least used to indicate a signal transmission direction of one time unit of the at least partially overlapping time, and wherein the signal transmission direction of the one time unit is inconsistent with a signal transmission direction on the access link using the first beam over the first time, determined by the repeater according to the first information.
47. The method according to Supplement 46, wherein the method further includes:
   the repeater performs reception or transmission on the access link by using the first beam over the first time.
48. The method according to Supplement 47, wherein
   the repeater determines performs reception (uplink) on the access link by using the first beam over the first time, and the third information is at least used to indicate one time unit in the at least partially overlapping time as a downlink time unit or a flexible time unit.
49. The method according to Supplement 47, wherein
   the repeater determines performs transmission (downlink) on the access link by using the first beam over the first time, and the third information is at least used to indicate one time unit in the at least partially overlapping time as an uplink time unit or a flexible time unit.
50. The method according to Supplement 46, wherein the method further includes:
   the repeater does not perform reception and/or does not perform transmission on the access link within a time unit at which the signal transmission directions are inconsistent.
51. The method according to Supplement 50, wherein
   the repeater determines performs reception (uplink) on the access link by using the first beam over the first time, and the third information is at least used to indicate one of time units included in the first time as a downlink time unit or a flexible time unit; and
   the repeater does not perform reception at the downlink time unit or flexible time unit, or, does not perform reception over the first time.
52. The method according to Supplement 50, wherein
   the repeater determines performs transmission (downlink) on the access link by using the first beam over the first time, and the third information is at least used to indicate one of time units included in the first time as an uplink time unit or a flexible time unit; and
   the repeater does not perform transmission at the uplink time unit or flexible time unit, or, does not perform transmission over the first time.
53. The method according to Supplement 29 or 30, wherein the third information is at least used to indicate that at least one time unit in time units included in the first time is not used for reception or transmission.
54. The method according to Supplement 53, wherein the method further includes:
   the repeater performs reception or transmission on the access link by using the first beam over the first time.
55. The method according to Supplement 53, wherein the method further includes:
   the repeater does not perform reception and/or not to perform transmission on the access link within the time unit indicated as being not used for reception or transmission.
56. The method according to any one of Supplements 53 to 55, wherein
   the third information is carried by signaling, the signaling is at least used to indicate the OFF time.
57. The method according to Supplement 56, wherein
   the signaling is further used to indicate an uplink time unit, and/or a downlink time unit, and/or a flexible time unit.
58. The method according to any one of Supplements 53 to 57, wherein the at least one time unit not used for reception or transmission is an OFF time unit, or a sleep/dormancy time unit, or a null time unit.
59. The method according to any one of Supplements 1 to 58, wherein the method further includes:
   the repeater acquires fourth information, the fourth information being related to a third time, the third time and the first time at least partially overlapping.
60. The method according to Supplement 59, wherein the fourth information is at least used to indicate the repeater to receive a signal from a network side or transmit a signal to the network side on a control link over the third time.
61. The method according to Supplement 60, wherein the repeater receives a signal from the network side or transmits a generated signal to the network side on the control link over the third time.
62. The method according to Supplement 61, wherein
   the repeater determines to perform reception on the access link by using the first beam over the first time at least according to the first information, the fourth information is used to indicate the repeater to perform reception on the control link over the third time; and
   the repeater does not perform reception on the access link at the at least partially overlapping time.
63. The method according to Supplement 61, wherein
   the repeater determines to perform transmission on the access link by using the first beam over the first time at least according to the first information, the fourth information is used to indicate the repeater to perform transmission on the control link over the third time; and
   the repeater does not perform transmission on the access link at the at least partially overlapping time.
64. The method according to Supplement 61, wherein
   the repeater determines to perform reception on the access link by using the first beam over the first time at least according to the first information, the fourth information is used to indicate the repeater to perform reception on the control link over the third time; and
   the repeater does not perform reception on the access link over the first time.
65. The method according to Supplement 61, wherein
   the repeater determines to perform transmission on the access link by using the first beam over the first time at least according to the first information, the fourth information is used to indicate the repeater to perform transmission on the control link over the third time; and
   the repeater does not perform transmission on the access link over the first time.
66. The method according to Supplement 60, wherein
   the repeater performs reception or transmission on the access link by using the first beam over the first time.
67. The method according to Supplement 66, wherein
   the repeater determines to perform reception on the access link by using the first beam over the first time at least according to the first information, the fourth information is used to indicate the repeater to receive a signal from a network side on the control link over the third time; and
   the repeater does not receive the signal from the network side on the control link over the at least partially overlapping time.
68. The method according to Supplement 66, wherein
   the repeater determines to perform transmission on the access link by using the first beam over the first time at least according to the first information, the fourth information is used to indicate the repeater to transmit a signal to a network side on the control link over the third time; and
   the repeater does not transmit the signal to the network side on the control link at the at least partially overlapping time.
69. The method according to Supplement 66, wherein
   the repeater determines to perform reception on the access link by using the first beam over the first time at least according to on the first information, the fourth information is used to indicate the repeater to receive a signal from a network side on the control link over the third time; and
   the repeater does not receive the signal from the network side on the control link over the third time.
70. The method according to Supplement 66, wherein
   the repeater determines to perform transmission on the access link by using the first beam over the first time at least according to the first information, the fourth information is used to indicate the repeater to transmit a signal to a network side on the control link over the third time; and
   the repeater does not transmit the signal to the network side on the control link over the third time.
71. The method according to any one of Supplements 59 to 70, wherein the fourth information is used to indicate the repeater to generate and transmit to a network side at least one of the following signals over the third time:
   Msg1 (RACH, preamble);
   BFR,
   SR,
   A/N,
   SRS,
   Msg3,
   Msg5,
   non-periodic CSI report, or
   semi-persistent CSI report.
72. The method according to any one of Supplements 59 to 70, wherein the fourth information is used to indicate the repeater to receive from a network side at least one of the following signals over the third time:
   Msg2,
   Msg4,
   PDCCH that schedules Msg2 and/or Msg4,
   CSIRS, or
   BFRR;
   and the signal is demodulated or decoded by the repeater.
73. The method according to any one of Supplements 1 to 72, wherein the repeater does not expect to be indicated with indication information inconsistent with the first information.
74. The method according to any one of Supplements 1 to 73, wherein the repeater does not expect to be indicated to perform transmission or reception by using a beam other than the first beam over the first time.
75. The method according to any one of Supplements 1 to 74, wherein the repeater does not expect to be indicated that the first time is an OFF time.
76. The method according to any one of Supplements 1 to 75, wherein
   in a case where the first information is at least used to indicate the repeater to perform reception on the access link by using the first beam over the first time, the repeater does not expect to be indicated that the first time includes a downlink time unit and/or a flexible time unit;
      and/or
   in a case where the first information is at least used to indicate the repeater to perform transmission on the access link by using the first beam over the first time, the repeater does not expect to be indicated that the first time includes an uplink time unit and/or a flexible time unit.
77. An information indication method, including:
   transmitting, by a network device, first information to a repeater, and
   wherein the repeater determines to perform reception or transmission on an access link (AC) by using a first beam over a first time at least according to the first information and/or a communication standard definition rule.
78. The method according to Supplement 77, wherein
   the first time includes at least one time unit, the at least one time unit being continuous or not continuous in a time domain.
79. The method according to Supplement 77 or 78, wherein
   the first information is carried by semi-static signaling, and/or, the first information is configured by an OAM entity, and/or, the first information is carried by a PDCCH or dynamic signaling.
80. The method according to any one of Supplements 77 to 79, wherein
   the first information is used to indicate the first time, and/or, the first information is used to indicate the first beam, and/or, the first information is used to indicate the repeater to perform reception or transmission on the access link.
81. The method according to any one of Supplements 77 to 80, wherein
   the indication of the first beam is based on a beam index, and/or, the indication of the first beam is based on a synchronous signal block (SSB) index, and/or, the indication of the first beam is based on a reference signal index.
82. The method according to any one of Supplements 77 to 81, wherein
   the first information is used to indicate the repeater to perform reception or transmission on the access link by using the first beam over the first time.
83. The method according to any one of Supplements 77 to 82, wherein
   the first information is used to indicate the first time and the first beam; the method further includes:
   transmitting second information to the repeater, the second information being at least used for the repeater to determine to perform reception or transmission on the access link by using the first beam over the first time.
84. The method according to Supplement 83, wherein
   the second information at least indicates that the first time includes an uplink time unit and/or a downlink time unit and/or a flexible time unit.
85. The method according to Supplement 83 or 84, wherein
   the second information includes time division duplex (TDD) uplink and downlink configuration information, the second information is carried by dynamic signaling and/or semi-static signaling, and/or, the second information is configured by an OAM entity.
86. The method according to any one of Supplements 77 to 82, wherein
   the first information is used to indicate the first time, the first time being related to a first signal.
87. The method according to Supplement 86, wherein the first signal is not generated by the repeater, and/or, the repeater does not demodulate and decode the first signal.
88. The method according to any one of Supplements 77 to 87, wherein the method further includes:
   transmitting third information to the repeater, the third information being related to a second time, the second time and the first time at least partially overlapping;
   the third information being further used to indicate a second beam to be forwarded by the repeater on the access link, and/or, the third information being further used to indicate a forwarding direction of the repeater on the access link within the at least partially overlapping time, and/or, the third information being further used to indicate a transmission direction and/or an on-off state related to the at least partially overlapping time.
89. The method according to Supplement 88, wherein
   the second beam is different from the first beam, and/or,
   the forwarding direction within the at least partially overlapping time is inconsistent with a direction of forwarding on the access link within the first time determined by the repeater, and/or,
   the transmission direction and/or the on-off state related to the at least partially overlapping time is/are inconsistent with the direction of forwarding on the access link within the first time determined by the repeater.
90. The method according to Supplement 88 or 89, wherein the first information is carried by semi-static signaling and/or configured by an OAM entity, and the third information is carried by dynamic signaling.
91. The method according to any one of Supplements 88 to 90, wherein the first information is carried by dynamic signaling, the third information is carried by semi-static signaling and/or carried dynamic signaling and/or indicated by an OAM;
   the semi-static signaling includes an MAC CE and/or RRC signaling;
   the repeater receives the third information before receiving the first information.
92. The method according to any one of Supplements 88 to 90, wherein the first information is carried by semi-static signaling, the third information is carried by semi-static signaling and/or indicated by an OAM and/or carried by dynamic signaling;
   the semi-static signaling includes an MAC CE and/or RRC signaling;
   the repeater receives the third information before receiving the first information.
93. The method according to any one of Supplements 77 to 92, wherein the method further includes:
   transmitting fourth information to the repeater, the fourth information being related to a third time, the third time and the first time at least partially overlapping.
94. The method according to Supplement 93, wherein the fourth information is at least used to indicate the repeater to receive a signal from a network side or transmit a signal to the network side on a control link over the third time.
95. The method according to Supplement 93 or 94, wherein the fourth information is used to indicate the repeater to generate and transmit to a network side at least one of the following signals over the third time:
   Msg1 (RACH, preamble);
   BFR,
   SR,
   A/N,
   SRS,
   Msg3,
   Msg5,
   non-periodic CSI report, or
   semi-persistent CSI report.
96. The method according to Supplement 93 or 94, wherein the fourth information is used to indicate the repeater to receive from a network side at least one of the following signals over the third time:
   Msg2,
   Msg4,
   PDCCH that schedules Msg2 and/or Msg4,
   CSIRS, or
   BFRR;
   and the signal is demodulated or decoded by the repeater.
97. The method according to any one of Supplements 77 to 96, wherein a network side does not transmit indication information inconsistent with the first information.
98. The method according to any one of Supplements 77 to 97, wherein the network side does not indicate the repeater to perform transmission or reception by using a beam other than the first beam over the first time.
99. The method according to any one of Supplements 77 to 98, wherein the network side does not indicate that the first time is an OFF time.
100. The method according to any one of Supplements 77 to 99, wherein
   in a case where the first information is at least used to indicate the repeater to perform reception on the access link by using the first beam over the first time, the network side does not indicate that the first time includes a downlink time unit and/or a flexible time unit;
      and/or
   in a case where the first information is at least used to indicate the repeater to perform transmission on the access link by using the first beam over the first time, the network side does not indicate that the first time includes an uplink time unit and/or a flexible time unit.
101. A repeater, including a memory and a processor, the memory storing a computer program, and the processor being configured to execute the computer program to implement the information indication method according to any one of Supplements 1 to 76.
102. A network device, including a memory and a processor, the memory storing a computer program, and the processor being configured to execute the computer program to implement the information indication method according to any one of Supplements 77 to 100.

## Claims

1. A repeater, comprising:
an acquiring unit configured to acquire first information; and
a determining unit configured to determine to perform, by using a first beam over a first time, reception or transmission on an access link at least according to the first information and/or a communication standard definition rule.

2. The repeater according to claim 1, wherein,
the determining unit determines the first beam and/or the first time according to at least one of the following: the communication standard definition rule, dynamic signaling, semi-static signaling, or operation administration and maintenance (OAM) configuration information.

3. The repeater according to claim 1, wherein,
the first time comprises at least one time unit, the at least one time unit being continuous or not continuous in a time domain.

4. The repeater according to claim 1, wherein,
the first information is carried by semi-static signaling, and/or,
the first information is configured by an operation administration and maintenance (OAM) entity, and/or,
the first information is carried by a physical downlink control channel or dynamic signaling.

5. The repeater according to claim 1, wherein,
the first information is used to indicate the first time, and/or,
the first information is used to indicate the first beam, and/or,
the first information is used to indicate the repeater to perform reception or transmission on the access link.

6. The repeater according to claim 1, wherein,
the first information is used to indicate the first time and the first beam; and
the acquiring unit further acquires second information, the second information being at least used for the repeater to determine to perform, by using the first beam over the first time, reception or transmission on the access link.

7. The repeater according to claim 6, wherein,
the second information at least indicates that the first time comprises an uplink time unit and/or a downlink time unit and/or a flexible time unit.

8. The repeater according to claim 1, wherein,
the acquiring unit further acquires third information, the third information being related to a second time, the second time at least partially overlapping with the first time;
the third information being further used to indicate a second beam to be forwarded by the repeater on the access link, and/or, the third information being further used to indicate a forwarding direction of the repeater on the access link within at least partially overlapping time, and/or, the third information being further used to indicate a transmission direction and/or an on-off state related to at least partially overlapping time.

9. The repeater according to claim 8, wherein,
a second beam is different from the first beam, and/or,
a forwarding direction within the at least partially overlapping time is inconsistent with a direction of forwarding on the access link within the first time determined by the repeater, and/or,
a transmission direction and/or the on-off state related to the at least partially overlapping time is/are inconsistent with a direction of forwarding on the access link within the first time determined by the repeater.

10. The repeater according to claim 8, wherein,
the third information is at least used to indicate the repeater to perform forwarding on the access link by using the second beam over the second time, a forwarding direction is consistent or inconsistent with a forwarding direction determined by the repeater over the first time, and the second beam is identical to or different from the first beam.

11. The repeater according to claim 10, wherein the repeater further comprises:
a forwarding unit configured to perform, by using the first beam over the first time, reception or transmission on the access link.

12. The repeater according to claim 8, wherein the first information is carried by semi-static signaling and/or configured by an operation administration and maintenance (OAM) entity, and the third information is carried by dynamic signaling.

13. The repeater according to claim 8, wherein,
the third information is further used to indicate a transmission direction and/or an on-off state related to at least partially overlapping time,
wherein the third information is at least used to indicate a signal transmission direction of one time unit of the at least partially overlapping time, and wherein the signal transmission direction of the one time unit is inconsistent with a signal transmission direction on the access link using the first beam over the first time, determined by the repeater according to the first information.

14. The repeater according to claim 13, wherein the repeater further comprises:
a forwarding unit configured to perform reception or perform, by using the first beam over the first time, transmission on the access link, and/or, not to perform reception and/or not to perform transmission on the access link within a time unit over which the signal transmission directions are inconsistent.

15. The repeater according to claim 8, wherein,
the third information is at least used to indicate that at least one time unit in time units included in the first time is not used for reception or transmission.

16. The repeater according to claim 15, wherein the repeater further comprises:
a forwarding unit configured to perform, by using the first beam over the first time, reception or perform transmission on the access link, and/or, not to perform reception and/or not to perform transmission on the access link within the time unit indicated as being not used for reception or transmission.

17. The repeater according to claim 1, wherein,
the acquiring unit obtains fourth information, the fourth information being related to a third time, the third time at least partially overlapping the first time; and the fourth information being at least used to indicate the repeater to receive a signal from a network side or transmit a signal to the network side on a control link over the third time.

18. The repeater according to claim 17, wherein the repeater further comprises:
a forwarding unit configured to receive a signal from the network side or transmit a generated signal to the network side on the control link over the third time, or, perform, by using the first beam over the first time, reception or transmission on the access link.

19. A network device, comprising:
a transmitting unit configured to transmit first information to a repeater,
wherein the repeater determines to perform, by using a first beam over a first time, reception or transmission on an access link at least according to the first information and/or a communication standard definition rule.

20. A communication system, comprising:
a network device configured to transmit first information to a repeater; and
the repeater configured to determine to perform, by using a first beam over a first time, reception or transmission on an access link at least according to the first information and/or a communication standard definition rule.
